(19) Europäisches Patentamt
European Patent Office
Office européen des brevets

(11) **EP 0 520 862 B1**

(12) **FASCICULE DE BREVET EUROPEEN**

(45) Date de publication et mention
de la délivrance du brevet:
**26.04.2000 Bulletin 2000/17**

(51) Int. Cl.[7]: **C01B 33/193**, C09C 1/30,
C08K 3/36

(21) Numéro de dépôt: **92401677.7**

(22) Date de dépôt: **17.06.1992**

(54) **Procédé de préparation de silice précipitée, silices précipitées obtenues et leur utilisation au renforcement des élastomères**

Verfahren zur Herstellung von Fällungskieselsäure sowie deren Verwendung zur Verstärkung von Elastomeren

Process for the preparation of precipitated silica, precipitated silicas thus obtained, and their use in the reinforcement of rubbers

(84) Etats contractants désignés:
**AT BE CH DE DK ES FR GB GR IT LI LU NL PT SE**

(30) Priorité: **26.06.1991 FR 9107859**

(43) Date de publication de la demande:
**30.12.1992 Bulletin 1992/53**

(73) Titulaire: **RHODIA CHIMIE
92408 Courbevoie Cédex (FR)**

(72) Inventeurs:
• **Chevallier, Yvonick
F-69150 Decines (FR)**

• **Rabeyrin, Michel
F-69570 Dardilly (FR)**

(74) Mandataire:
**Dubruc, Philippe et al
RHODIA SERVICES
Direction de la Propriété Industrielle
25, quai Paul Doumer
92408 Courbevoie Cédex (FR)**

(56) Documents cités:
**EP-A- 0 018 866          EP-A- 0 249 524
EP-A- 0 396 450          EP-A- 0 407 262
FR-A- 1 072 520          US-A- 3 860 682
US-A- 4 076 549**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un nouveau procédé de préparation de silice précipitée, certaines silices précipitées susceptibles d'être obtenues selon ce procédé, des silices précipitées se présentant sous forme de granulés, de poudre ou de billes sensiblement sphériques et leur application comme charge renforçante pour les élastomères.

On sait que la silice précipitée est utilisée depuis longtemps comme charge blanche renforçante dans les élastomères, et en particulier dans les pneumatiques.

Cependant, comme toute charge renforçante, il convient qu'elle puisse se manipuler d'une part, et s'incorporer d'autre part, facilement dans les mélanges.

La présentation sous forme pulvérulente n'est, à cet égard, pas toujours satisfaisante dans la mesure où, d'un pur point de vue manutention et mise en oeuvre, elle peut entraîner un poussiérage important et une incorporation lente de la charge (densité apparente faible) ; en, outre, le mélangeage des caoutchoucs exige des opérations de dosage très précises auxquelles se prêtent souvent mal les charges en poudre (coulabilité).

Une présentation sous forme de granulés permet certes d'obvier convenablement aux inconvénients précédents, mais elle peut entraîner malheureusement souvent une dispersion insuffisante de la charge dans l'élastomère, et procurer finalement un degré de renforcement moindre que celui qui pourrait être obtenu à partir d'une charge initialement sous forme de poudre.

En effet, on sait, d'une manière générale, que pour obtenir les propriétés de renforcement optimales conférées par une charge, il convient que cette dernière soit présente dans la matrice élastomére sous une forme finale qui soit à la fois la plus finement divisée possible et répartie de la façon la plus homogène possible. Or, dans le cas particulier où cette charge est introduite initialement sous la forme de granulés, de telles conditions ne peuvent être réalisées que dans la mesure où, d'une part, les granulés présentent de très bonnes aptitudes à s'incorporer dans la matrice lors du mélange avec l'élastomère (incorporabilité du granulé) et à se désagréger ou se désagglomérer sous la forme d'une poudre très fine (désagrégation du granulé), et où, d'autre part, la poudre issue du processus de désagrégation précité peut elle-même, à son tour, se disperser parfaitement et de façon homogène dans l'élastomère (dispersion de la poudre). On conçoit aisement que de telles exigences sont peu compatibles, voire contradictoires, avec la nature même d'un granulé, compte tenu du caractère intrinsèquement dense, compact et résistant de ce dernier, et de l'énergie de cohésion relativement élevée qui lie entre eux les grains de silice le constituant. La mise au point de granulés de silice précipitée pour lesquels ni la résistance mécanique ni l'aptitude à la dispersion ne sont sacrifiées, constitue encore à ce jour un problème de compromis difficilement surmontable.

Une autre difficulté réside dans le fait que, pour des raisons d'affinités réciproques, les particules de silice (qu'elles soient ou non issues de la désagrégation préalable d'un granulé) ont une facheuse tendance, dans la matrice élastomère, à s'agglomérer entre elles. Ces intéractions silice/silice ont pour conséquence néfaste de limiter les propriétés de renforcement à un niveau sensiblement inférieur à celui qu'il serait théoriquement possible d'atteindre si toutes les intéractions silice/élastomère susceptibles d'être crées pendant l'opération de mélangeage, étaient effectivement obtenues (ce nombre théorique d'intéractions silice/élastomère étant, comme cela est bien connu, directement proportionnel à la surface externe, ou surface CTAB, de la silice utilisée).

En outre, de telles intéractions silice/silice tendent, à l'état cru, à augmenter la raideur et la consistance des mélanges, rendant ainsi leur mise en oeuvre plus difficile.

La présente invention a pour but d'obvier aux inconvénients précités.

Plus précisément, elle a notamment pour but de proposer un nouveau procédé de préparation de silice précipitée ayant une aptitude à la dispersion (et à la désagglomération) et des propriétés renforçantes améliorées, en particulier qui, utilisée à titre de charge renforçante pour élastomères, confère à ces derniers des propriétés mécaniques, comme par exemple la résistance à la rupture, la résistance au déchirement et la résistance à l'abrasion, hautement améliorées par rapport aux silices de l'art antérieur.

L'invention concerne également certaines des silices précipitées susceptibles d'êtres obtenues selon ce procédé.

Elle est aussi relative à des silices précipitées se présentant sous forme de granulés, de poudre ou de billes sensiblement sphériques ayant une aptitude à la dispersion (et à la désagglomération) et des propriétés renforçantes améliorées.

Elle concerne enfin l'utilisation desdites silices précipitées comme charge renforçante pour élastomères, notamment pour pneumatiques.

Ainsi, l'un des objets de l'invention est un procédé de préparation de silice précipitée ayant une aptitude à la dispersion et des propriétés renforçantes améliorées du type comprenant la réaction d'un silicate avec un agent acidifiant ce par quoi l'on obtient une suspension de silice précipitée, puis la séparation et le séchage de cette suspension, caractérisé en ce qu'on réalise la précipitation de la manière suivante :

(i) on forme un pied de cuve initial comportant au moins une partie de la quantité totale du silicate engagé dans la réaction et un électrolyte, la concentration en silice dans ledit pied de cuve initial étant inférieure à 100 g/l et la concentration en électrolyte dans ledit pied de cuve initial étant inférieure à 17 g/l,

(ii) on ajoute l'agent acidifiant audit pied de cuve jusqu'à l'obtention d'une valeur du pH du milieu réactionnel d'au moins environ 7,

(iii) on ajoute au milieu réactionnel de l'agent acidifiant et, le cas échéant, simultanément la quantité restante du silicate,

et en ce qu'on sèche une suspension présentant un taux de matière sèche d'au plus 24 % en poids.

Il a été ainsi trouvé qu'une concentration faible en silice et en électrolyte dans le pied de cuve initial ainsi qu'un taux approprié de matière sèche de la suspension à sècher constituaient des conditions importantes pour conférer aux produits obtenus leurs excellentes propriétés.

Il est à noter, d'une manière générale, que le procédé concerné est un procédé de synthèse de silicate de précipitation, c'est-à-dire que l'on fait agir un agent acidifiant sur un silicate.

Le choix de l'agent acidifiant et du silicate se fait d'une manière bien connue en soi. On peut rappeller qu'on utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

On peut par ailleurs utiliser en tant que silicate toute forme courante de silicates tels que métasilicates, disilicates et avantageusement un silicate de métal alcalin notamment le silicate de sodium ou de potassium.

Dans le cas où l'on utilise le silicate de sodium, celui-ci présente, en général, un rapport pondéral $SiO_2/Na_2O$ compris entre 2 et 4, plus particulièrement entre 3,0 et 3,7.

En ce qui concerne plus particulièrement le procédé de préparation de l'invention, la précipitation se fait d'une manière spécifique selon les étapes suivantes.

On forme tout d'abord un pied de cuve qui comprend du silicate ainsi qu'un électrolyte. La quantité de silicate présente dans le pied de cuve peut soit être égale à la quantité totale engagée dans la réaction, soit ne représenter qu'une partie de cette quantité totale.

En ce qui concerne l'électrolyte, ce terme s'entend ici dans son acceptation normale, c'est-à-dire qu'il signifie toute substance ionique ou moléculaire qui, lorsqu'elle est en solution, se décompose ou se dissocie pour former des ions ou des particules chargées.

On utilise en particulier un sel du groupe des sels des métaux alcalins et alcalino-terreux et de préférence le sel du métal de silicate de départ et de l'agent acidifiant par exemple le sulfate de sodium dans le cas de la réaction d'un silicate de sodium avec l'acide sulfurique.

Selon une caractéristique essentielle du procédé de préparation selon l'invention, la concentration en électrolyte dans le pied de cuve initial est inférieure à 17 g/l, de préférence inférieure à 14 g/l.

Selon une autre caractéristique essentielle dudit procédé, la concentration en silice dans le pied de cuve initial est inférieure à 100 g de $SiO_2$ par litre. De préférence, cette concentration est inférieure à 80 g/l, notamment à 70 g/l. En particulier, lorsque l'acide utilisé pour la neutralisation présente une concentration élevée, notamment supérieure à 70 %, il convient alors de travailler avec un pied de cuve initial de silicate dont la concentration en $SiO_2$ est inférieure à 80 g/l.

Les conditions imposées à la concentration en électrolyte et en silice dans le pied de cuve initial conditionnent en partie les caractéristiques de porosité des silices obtenues.

La deuxième étape consiste à ajouter l'agent acidifiant dans le pied de cuve de composition décrite plus haut.

Cette addition qui entraîne une baisse corrélative du pH du milieu réactionnel se fait jusqu'à ce qu'on atteigne une valeur d'au moins environ 7, généralement comprise entre 7 et 8.

Une fois cette valeur atteinte, et dans le cas d'un pied de cuve de départ ne comprenant qu'une partie de la quantité totale du silicate engagé, on procède alors avantageusement à une addition simultanée d'agent acidifiant et de la quantité restante de silicate.

La réaction de précipitation proprement dite est terminée lorsque l'on a ajouté toute la quantité restante de silicate.

Il est avantageux à la fin de la précipitation et notamment après l'addition simultanée précitée, d'effectuer un mûrissement du milieu réactionnel, ce mûrissement pouvant par exemple durer de 5 minutes à 1 heure.

Il est enfin possible dans tous les cas (c'est-à-dire aussi bien dans le cas d'un pied de cuve de départ ne comprenant qu'une partie de la quantité totale du silicate engagé que dans le cas d'un pied de cuve de départ comprenant la quantité totale de silicate engagé), après la précipitation, dans une étape ultérieure éventuelle, d'ajouter au milieu réactionnel une quantité supplémentaire d'agent acidifiant. Cette addition se fait généralement jusqu'à l'obtention d'une valeur de pH comprise entre 3 et 6,5, de préférence entre 4 et 6,5. Elle permet notamment de règler le pH de la silice finale à la valeur désirée pour une application donnée.

La température du milieu réactionnel est généralement comprise entre 70 et 98°C.

Selon une variante de l'invention, la réaction est effectuée à une température constante comprise entre 80 et 95°C. Selon une autre variante de l'invention, la température de fin de réaction est plus élevée que la température de début de réaction : ainsi, on maintient la température au début de la réaction de préférence entre 70 et 95°C; puis, on augmente la température en quelques minutes de préférence jusqu'à une valeur comprise entre 80 et 98°C à laquelle elle est maintenue jusqu'à la fin de la réaction.

On obtient, à l'issue des opérations qui viennent d'être décrites, une bouillie de silice qui est ensuite séparée (séparation liquide-solide). Cette séparation consiste généralement en une filtration, suivie d'un lavage si nécessaire. La filtration peut se faire selon toute méthode convenable, par exemple par filtre presse ou filtre à bande ou filtre rotatif sous vide.

La suspension de silice précipitée ainsi récupérée (gâteau de filtration) est ensuite séchée.

Selon une caractéristique essentielle du procédé de préparation selon l'invention, cette suspension doit présenter immédiatement avant son séchage un taux de matière sèche d'au plus 24 % en poids, de préférence d'au plus 23 % en poids.

Ce séchage peut se faire selon tout moyen connu en soi.

De préférence, le séchage se fait par atomisation.

A cet effet, on peut utiliser tout type d'atomiseur convenable, notamment des atomiseurs à turbines, à buses, à pression liquide ou à deux fluides.

Selon une variante du procédé de l'invention, la suspension à sécher présente un taux de matière sèche supérieur à 18 % en poids, de préférence supérieur à 20 % en poids. Le séchage est alors généralement effectué au moyen d'un atomiseur à buses.

La silice précipitée susceptible d'être obtenue selon cette variante de l'invention se présente avantageusement sous forme de billes sensiblement sphériques, de préférence d'une taille moyenne d'au moins 80 µm, et constitue l'un des objets de l'invention.

Cette teneur en matière sèche peut être obtenue directement à la filtration en utilisant un filtre convenable donnant un gâteau de filtration à la bonne teneur. Une autre méthode consiste, après la filtration, à une étape ultérieure du procédé, à rajouter au gâteau de la matière sèche, par exemple de la silice sous forme pulvérulente, de manière à obtenir la teneur nécessaire.

Il y a lieu de noter que, comme cela est bien connu, le gâteau ainsi obtenu n'est pas, en général, dans des conditions permettant une atomisation notamment à cause de sa viscosité trop élevée.

D'une manière connue en soi, on soumet alors le gâteau à une opération de délitage. Cette opération peut se faire par passage du gâteau dans un broyeur de type colloïdal ou à bille. Par ailleurs, pour abaisser la viscosité de la suspension à atomiser, il est possible d'ajouter de l'aluminium notamment sous forme d'aluminate de sodium au cours du procédé comme décrit dans la demande de brevet FR-A-2536380 dont l'enseignement est incorporé ici. Cette addition peut se faire en particulier au moment même du délitage.

A l'issue du séchage, on peut procéder à une étape de broyage sur le produit récupéré, notamment sur le produit obtenu par séchage de la suspension présentant un taux de matière sèche supérieur à 18 % en poids. La silice précipitée qui est alors susceptible d'être obtenue se présente avantageusement sous forme d'une poudre, de préférence de taille moyenne comprise entre 5 et 70 µm.

Les produits broyés à la granulométrie désirée peuvent être séparés des éventuels produits non conformes au moyen par exemple de tamis vibreurs présentant des tailles de maille appropriées, et les produits non conformes ainsi récupérés être renvoyés au broyage.

De même, selon une autre variante du procédé de l'invention, la suspension à sécher présente un taux de matière sèche inférieur à 18 % en poids. Le séchage est alors généralement effectué au moyen d'un atomiseur à turbines. La silice précipitée qui est alors susceptible d'être obtenue selon cette variante de l'invention se présente avantageusement sous la forme d'une poudre, de préférence de taille moyenne comprise entre 5 et 70 µm.

Les silices précipitées se présentant sous forme de poudres susceptibles d'être obtenues selon une variante du procédé de l'invention présentent de préférence une prise d'huile DOP comprise entre 180 et 350 ml/100g, par exemple entre 200 et 345 ml/100g ; elles constituent alors l'un des objets de l'invention.

Enfin, le produit séché (notamment à partir d'une suspension ayant un taux de matière sèche inférieur à 18 % en poids) ou broyé peut, selon une autre variante du procédé de l'invention, être soumis à une étape d'agglomération.

On entend ici par agglomération tout procédé qui permet de lier entre eux des objets finement divisés pour les amener sous la forme d'objets de plus grande taille et résistant mécaniquement.

Ces procédés sont notamment le compactage à sec, la compression directe, la granulation voie humide (c'est-à-dire avec utilisation d'un liant tel que eau, slurry de silice, ...), et l'extrusion. Les dispositifs et appareillages utilisés pour la mise en oeuvre de tels procédés sont bien connus en soi, et, parmi ceux-ci, on peut citer, par exemple, les presses à compacter, les pastilleuses, les compacteuses à cylindres tournants, les granulateurs tournants, et les extrudeuses.

Selon la présente invention, le procédé de compactage à sec est préféré. A cet effet, on utilise avantageusement une compacteuse à cylindres, c'est-à-dire une compacteuse dans laquelle le compactage est assuré par passage du produit pulvérulent entre deux rouleaux sous pression et tournant en sens inverse. La pression utilisée est généralement comprise entre 15 et 50 bars, de préférence entre 20 et 35 bars. Elle conditionne largement les propriétés mécaniques, et notamment la résistance à l'attrition, des produits obtenus.

Lorsque l'on met en oeuvre cette technique, il s'avère avantageux, avant de procéder au compactage, de désaérer (opération aussi appelée pré-densification ou dégazage) les produits pulvérulents de manière à éliminer l'air inclus dans ceux-ci. Cette opération préalable permet de mieux contrôler l'alimentation des produits au niveau des cylindres de la presse et assure un compactage plus régulier. Cette désaération peut être réalisée dans des appareils bien connus en soi, par exemple par passage des poudres entre des éléments poreux (plaques, cylindres) munis d'un système d'aspiration par le vide.

La silice précipitée susceptible d'être obtenue selon cette variante de l'invention se présente avantageusement sous la forme de granulés, de taille généralement comprise entre 1 et 10 mm et ayant de préférence un taux d'attrition (dont la méthode de mesure est décrite plus loin) inférieur à 20 %.

Contrairement à ce qui se passe dans l'art antérieur en opérant sur des poudres de silices classiques, on notera que l'agglomération des poudres de silice obtenues selon l'invention, selon des techniques telles que ci-dessus, présente un caractère éminemment réversible, en ce sens que les granulés obtenus conservent une aptitude à se désagréger à nouveau, sous la forme d'une poudre fine, exceptionnelle.

A l'issue de l'étape d'agglomération, les produits peuvent être calibrés à une taille désirée, par exemple par tamisage, puis conditionnés pour leur utilisation future.

Les poudres de silice précipitée obtenues selon l'invention offrent ainsi l'avantage, entre autre, d'accéder de manière simple, efficace et économique à des granulés tels que précités, notamment par des opérations classiques de mise en forme, telles que par exemple une granulation ou un compactage, sans que ces dernières n'entrainent de dégradations susceptibles de masquer, voire annihiler, les excellentes propriétés renforçantes intrinsèques attachées à ces poudres, comme cela peut être le cas dans l'art antérieur en mettant en oeuvre des poudres classiques.

D'autres objets de l'invention consistent en de nouvelles silices précipitées se présentant sous forme de granulés, de poudre ou de billes sensiblement sphériques ayant une aptitude à la dispersion (et à la désagglomération) et des propriétés renforçantes remarquables.

Dans l'exposé qui suit, la surface spécifique BET est déterminée selon la méthode de BRUNAUER - EMMET - TELLER décrite dans "The journal of the American Chemical Society", Vol. 60, page 309, février 1938 et correspondant à la norme NFT 45007 (novembre 1987).

La surface spécifique CTAB est la surface externe déterminée selon la norme NFT 45007 (novembre 1987) (5. 12).

La prise d'huile DOP est déterminée selon la norme NFT 30-022 (mars 1953) en mettant en oeuvre le dioctylphtalate.

La densité de remplissage à l'état tassé (DRT) est mesurée selon la norme NFT-030100.

On précise enfin que les volumes poreux donnés sont mesurés par porosimétrie au mercure, les diamètres de pores étant calculés par la relation de WASHBURN avec un angle de contact théta égal à 130° et une tension superficielle gamma égale à 484 Dynes/cm (porosimètre MICROMERITICS 9300).

Ainsi, il est maintenant proposé, selon l'invention, une nouvelle silice précipitée caractérisée en ce qu'elle se présente sous forme de granulés ayant une surface spécifique BET comprise entre environ 140 et 200 $m^2$/g, une surface spécifique CTAB comprise entre environ 140 et 200 $m^2$/g, un taux d'attrition inférieur à 20 %, et une distribution poreuse telle que le volume poreux constitué par les pores dont le diamètre est compris entre 175 Å et 275 Å représente au moins 60 % du volume poreux constitué par les pores de diamètres inférieurs ou égaux à 400 Å.

Comme indiqué ci-avant, de tels granulés présentent une aptitude à la désagglomération et à la dispersion tout à fait remarquable. En outre, ils permettent d'atteindre un compromis mise en oeuvre/propriétés mécaniques à l'état vulcanisé nettement supérieur à celui qu'il est possible d'obtenir en pratique avec des granulés de silice de l'art antérieur possédant pourtant un pouvoir renforçant théorique équivalent (c'est-à-dire une surface spécifique externe CTAB proche ou identique).

Certaines des caractéristiques, de type structurel, des granulés selon l'invention vont maintenant être décrites.

Comme déjà indiqué, les granulés selon l'invention présentent une surface spécifique BET comprise entre environ 140 et 200 $m^2$/g. De préférence, cette surface spécifique est comprise entre environ 150 et 190 $m^2$/g.

Ils présentent en outre une surface spécifique CTAB comprise entre environ 140 et 200 $m^2$/g. De préférence, elle est comprise entre 140 et 180 $m^2$/g.

Selon un mode préféré de réalisation de l'invention, les granulés présentent un rapport surface spécifique BET/surface spécifique CTAB compris entre 1,0 et 1,2, c'est-à-dire que les granulés présentent une faible microporosité.

Les granulés selon l'invention présentent une prise d'huile DOP qui est généralement comprise entre 150 et 350 ml/100g, et, plus particulièrement, entre 180 et 300 ml/100g.

Une caractéristique intéressante des granulés de silice selon l'invention réside également dans leur densité. Généralement, leur densité de remplissage à l'état tassé (DRT) est d'au moins 0,27 et peut aller jusqu'à 0,37.

Pour ce qui est des caractéristiques de porosité des granulés selon l'invention, ces derniers présentent, en général, un volume poreux total d'au moins 1 cm$^3$/g, et, plus particulièrement, entre 1,5 et 2 cm$^3$/g.

Une des caractéristiques essentielles des granulés selon l'invention réside plus spécifiquement dans la distribution, ou répartition, du volume poreux, et plus particulièrement dans la distribution du volume poreux qui est généré par les pores de diamètres inférieurs ou égaux à 400 Å. Ce dernier volume est particulièrement important, car il correspond au volume poreux utile (ou efficace) des charges qui sont utilisées dans le renforcement des élastomères. L'analyse des programmes montre que les granulés selon l'invention présentent une caractéristique unique, à savoir qu'au moins 60 %, de préférence au moins 65 %, dudit volume poreux utile est constitué par des pores dont le diamètre est compris dans la plage spécifique de 175 Å à 275 Å.

Cette distribution extrêmement resserrée du diamètre des pores qui génèrent majoritairement le volume poreux utile semble être à la base de l'aptitude à la dispersion exceptionnelle des granulés selon l'invention par rapport aux granulés de l'art antérieur.

La résistance mécanique intrinsèque des granulés selon l'invention est appréhendée et quantifiée au moyen d'un test d'attrition qui, globalement, consiste à soumettre les granulés à une pression d'écrasement déterminée puis à mesurer le taux de fines générées, ce taux de fines correspondant à un taux d'attrition.

Plus précisément encore, la mesure du taux d'attrition est effectuée selon le protocole opératoire suivant : un lot échantillon de granulés est préalablement tamisé sur tamis 400 microns (tamiseuse RETSCH type VIBRO ; tamis PROLABO en inox ; temps de vibration : 5 mn ; niveau de vibration : 20). Les granulés récupérés sur le tamis (refus tamis) sont ensuite divisés en trois lots de masses voisines, soient M1, M2 et M3 (ces masses sont généralement choisies entre 40 et 60 g). Pour chacun des lots, on procède alors à un écrasement sous presse hydraulique manuelle (presse FOG) de la manière suivante :

(i) le lot est placé dans un récipient cylindrique (diamètre : 85 mm ; épaisseur : 2 mm) puis recouvert, sans choc, d'un couvercle métallique à surface lisse.
(ii) on amène le piston de la presse sur le couvercle,
(iii) on descent le piston jusqu'à l'obtention d'une force de 200 kg,
(iv) dès que la force d'écrasement de 200 kg est atteinte, on remonte le piston.

Chaque lot écrasé est alors tamisé sur un tamis 400 microns comme précédemment, à cette différence près que le temps de vibration est fixé à 2 mn. On mesure alors la masse des matières fines passées à travers le tamis, soient respectivement m1, m2 et m3.

Pour chacun des 3 lots, on définit ainsi un taux d'attrition respectif :

$$TAUX\ 1 = 100\ m1/M1\ (\%)$$

$$TAUX\ 2 = 100\ m2/M2\ (\%)$$

$$TAUX\ 3 = 100\ m3/M3\ (\%)$$

La moyenne de ces trois taux (c'est-à-dire (TAUX 1 + TAUX 2 + TAUX 3)/3) définit la valeur du taux d'attrition de l'échantillon initial.

Les granulés de silice selon l'invention présentent un taux d'attrition inférieur à 20 %. De préférence, ce taux d'attrition est inférieur à 15 %.

Le taux d'attrition des granulés selon l'invention est directement lié à l'intensité des pressions mécaniques qui ont été mises en jeu antérieurement pour agglomérer, selon des procédés tels que définis plus en détails ci-dessus, les particules constituant les poudres initiales. Plus ces pressions sont importantes, et plus le taux d'attrition diminue. Toutefois, même avec des taux d'attrition très bas, les granulés selon l'invention présentent la propriété tout à fait remarquable de conserver une aptitude à la désagrégation et à la dispersion excellente.

Cette aptitude peut être quantifiée au moyen de deux tests spécifiques, l'un basé sur le comportement au broyage des granulés et l'autre sur leur comportement rhéologique après broyage.

Qualitativement, l'aptitude à la désagrégation s'apprécie par le degré de facilité ou de difficulté avec lequel des granulés, lorsqu'ils sont soumis à une action mécanique extérieure, par exemple un broyage, peuvent être amenés sous une forme plus finement divisée.

Cette approche revient à appréhender de manière indirecte le niveau d'énergie de cohésion interne du granulé.

Quantitativement, les granulés présenteront une énergie de cohésion d'autant plus faible, et donc une aptitude à la désagrégation d'autant plus élevée, que, à quantité égale d'énergie extérieure fournie sous forme mécanique lors de leur broyage, ils conduiront à des poudres de granulométrie plus fine.

De manière encore plus précise, le test de broyage est réalisé selon le protocole suivant:

des granulés sont introduits en continu, et avec un débit d'alimentation constant fixé à 1,5 Kg/h, dans un broyeur à coûteaux (broyeur RETSCH modèle ZM1). Dans cet appareil, le broyage est assuré par la rotation d'une couronne en métal comportant 24 coûteaux, la vitesse de rotation étant fixée à 20 000 t/mn, et une grille métallique non mobile (diamètre des mailles: 0,5 mm) est disposée de façon concentrique au rotor mais de manière inversée par rapport à la position normale indiquée par le constructeur. Le produit broyé est récupéré en continu à la sortie du broyeur au moyen d'un cyclone, puis analysé.

Les déterminations granulométriques sur les poudres ainsi récupérées sont effectuées à l'aide d'un granulomètre à laser (SYMPATEC), et on mesure alors le diamètre médian ($D_{50}$) des poudres.

Selon le test, les poudres récupérées à l'issue du premier passage dans le broyeur peuvent être introduites à nouveau dans ce dernier pour y subir un deuxième broyage, et ceci en suivant rigoureusement le même protocole opératoire que ci-dessus, étant entendu que cette opération peut être répétée autant de fois que désirée. Après chaque passage dans le broyeur, on mesure le diamètre médian de la poudre récupérée. En procédant ainsi, il est alors possible de suivre l'évolution du $D_{50}$ des poudres en fonction du nombre de passages dans le broyeur.

Comme cela ressortira des exemples donnés ci-après, les granulés selon l'invention présentent, par rapport aux granulés de l'art antérieur, au moins deux particularités intéressantes : la première est que, après un seul broyage, ils conduisent déjà à des poudres très fines, c'est-à-dire des poudres dont le $D_{50}$ est généralement inférieur à 7 µm : la deuxième est que, après plusieurs broyages successifs, et identiques, ils conduisent à des poudres pour lesquelles on observe une décroissance régulière et significative du $D_{50}$, ce dernier pouvant descendre jusqu'à une valeur d'environ 4 µm ; en d'autres termes, lesdits granulés peuvent être broyés jusqu'à l'obtention d'une poudre de granulométrie telle que son D50 est environ de 4 µm.De telles valeurs traduisent l'excellente aptitude à la désagrégation des granulés selon l'invention. Elles sont le gage de l'obtention, après mélange avec l'élastomère, d'un composite renforcé par une charge très fine et non agrégée.

Comparativement, les granulés de l'art antérieur conduisent, après un premier broyage, à des poudres dont le $D_{50}$ est plus élevé, supérieur à 7,5 µm et généralement de l'ordre de 9 à 10 µm, et, même en procédant à de nombreux broyages subséquents, il n'est pas possible de descendre ce $D_{50}$ à une valeur inférieure à 6 µm.

Une autre caractéristique originale et importante des granulés selon l'invention réside dans le comportement rhéologique des poudres générées par la désagrégation de ces derniers.

Ce comportement est appréhendé au moyen de mesures de viscosité BROOKFIELD, qui traduisent et quantifient l'aptitude à la dispersion (ou dispersibilité) des granulés désagrégés. Les mesures de viscosité BROOKFIELD sont réalisées sur des produits qui ont été broyés selon le test de broyage tel qu'il a été défini précédemment, et elles sont déterminées conformément au protocole suivant :

- on prépare une solution de dioctylphtalate contenant 8 % en poids d'une poudre de silice telle qu'obtenue après broyage,
- le mélange est rendu parfaitement homogène au moyen d'une agitation vigoureuse (agitateur STRÖBER : 1000 tr/mn pendant 10 mn),
- le mélange est porté à 20°C (bain thermostaté), température à laquelle doit être effectuée la mesure,
- les mesures de viscosité des mélanges sont alors effectuées au moyen d'un viscosimètre BROOKFIELD RVT équipé d'un mobile n° 3 ou 4,
- on effectue un premier cisaillement à 50 tr/mn pendant 2 mn, puis un cisaillement à 5 tr/mn pendant 3 mn, avant de prendre la mesure.

Les granulés selon l'invention présentent, après broyage, des viscosités BROOKFIELD extrêmement élevées. Après un premier broyage, on obtient déjà des poudres dont la viscosité BROOKFIELD est de préférence d'au moins 10 Pa.s, et notamment d'au moins 13 Pa.s. En outre, après plusieurs broyages successifs et identiques, les granulés conduisent à des poudres pour lesquelles on note une croissance régulière et extrêmement significative de la viscosité BROOKFIELD, cette dernière pouvant être d'au moins 30 Pa.s. En d'autres termes, lesdits granulés peuvent être broyés jusqu'à l'obtention d'une poudre présentant une viscosité BROOKFIELD d'au moins 30 Pa.s. Ces valeurs traduisent l'excellente aptitude à la dispersion des poudres obtenues après désagrégation des granulés selon l'invention ; elles sont le gage de l'obtention d'un mélange parfaitement homogène entre les fines particules de silice renforçantes et la matrice élastomère.

A titre de comparaison, les granulés de l'art antérieur conduisent, après un premier broyage, à des poudres dont la viscosité BROOKFIELD est inférieur à 10 Pa.s; par ailleurs, en procédant à plusieurs broyages successifs, on observe une évolution moindre de la viscosité BROOKFIELD des poudres, celle-ci n'excédant pas généralement 20 Pa.s.

Les granulés selon l'invention peuvent se présenter sous des formes les plus diverses. A titre d'exemple de forme, on peut citer les formes sphérique, cylindrique, parallélépipédique, de pastille, de plaquette, de boulette, d'extrudé à section circulaire ou polylobée, et autres formes analogues. Leurs dimensions peuvent être très variées et aller par exemple de un à plusieurs millimètres, généralement de 1 à 10 mm, selon l'axe de leur plus grande dimension (longueur) ; le rapport longueur/largeur (la largeur étant définie comme la dimension immédiatement inférieure à la longueur) peut lui même varier dans de larges limites, généralement entre 1 et 10, et, plus particulièrement, entre 1 et 5.

Il est aussi proposé, selon l'invention, une nouvelle silice précipitée caractérisée en ce qu'elle se présente sous forme de poudre ayant une surface spécifique BET comprise entre environ 140 et 200 $m^2$/g, une surface spécifique CTAB comprise entre environ 140 et 200 $m^2$/g, une prise d'huile DOP comprise entre 180 et 350 ml/100g, et une distribution poreuse telle que le volume poreux constitué par les pores dont le diamètre est compris entre 175 Å et 275 Å représente au moins 50 % du volume poreux constitué par les pores de diamètres inférieurs ou égaux à 400 Å.

Comme déjà souligné, de telles silices, outre le fait qu'elles constituent des précurseurs privilégiés pour la synthèse des granulés selon l'invention, possèdent déjà en elles-mêmes des propriétés tout à fait intéressantes, notamment en ce qui concerne l'amélioration significative du compromis mise en oeuvre/propriétés mécaniques finales qu'elles permettent d'obtenir par rapport aux poudres de silice de l'art antérieur.

Certaines des caractéristiques, de type structurelles, des poudres selon l'invention vont maintenant être décrites.

Ces poudres présentent une surface spécifique BET comprise entre environ 140 et 200 $m^2$/g. De préférence, elle est comprise entre 150 et 190 $m^2$/g.

Leur surface spécifique CTAB est, quant à elle, également comprise entre environ 140 et 200 $m^2$/g. De préférence, elle est comprise entre 140 et 180 $m^2$/g.

Selon un mode de réalisation particulier et préféré, ces poudres présentent un rapport surface spécifique BET/surface spécifique CTAB compris entre 1,0 et 1,2, c'est-à-dire qu'elles sont faiblement microporeuses.

Leur prise d'huile DOP est comprise entre 180 et 350 ml/100g, et, plus particulièrement, entre 200 et 345 ml/100g.

En ce qui concerne leur densité de remplissage à l'état tassé (DRT), cette dernière est, en général, d'au moins 0,17, et, par exemple, comprise entre 0,2 et 0,3.

Pour ce qui est des caractéristiques de porosité des poudres de silice selon l'invention, ces dernières présentent habituellement un volume poreux total d'au moins 2,5 $cm^3$/g, généralement compris entre 3 et 5 $cm^3$/g.

Comme pour les granulés décrits ci-avant, l'une des caractéristiques essentielles des poudres de silice selon l'invention réside dans la répartition de leur volume poreux. L'analyse des programmes des poudres selon l'invention montre que le volume poreux constitué par les pores dont le diamètre est compris entre 175 Å et 275 Å représente à lui seul au moins 50 % du volume poreux qui est généré par les pores de diamètres inférieurs ou égaux à 400 Å (volume poreux utile). De préférence, le volume poreux précité constitue au moins 60 % dudit volume poreux utile.

Les poudres selon l'invention présentent généralement une granulométrie moyenne ($D_{50}$) comprise entre 5 et 70 μm, de préférence entre 10 et 30 μm. Cette granulométrie correspond à la granulométrie la mieux adaptée à leur mise en forme ultérieure.

Comme pour les granulés, il est possible de caractériser ces poudres par un test de broyage et un test de viscosité tels qu'ils ont été définis ci-avant dans la description.

Ainsi, après un premier broyage opéré sur celles-ci, on obtient une poudre présentant un diamètre médian ($D_{50}$) de préférence inférieur à 7, par exemple de l'ordre de 6 μm et une viscosité BROOKFIELD de préférence d'au moins 20 Pa.s, généralement d'au moins 30 Pa.s. A titre comparatif, avec des poudres de silice précipitée de l'art antérieur, on obtient généralement un $D_{50}$ supérieur à 7,5 μm et une viscosité BROOKFIELD inférieure à 20 Pa.s.

L'aptitude à la désagglomération des poudres selon l'invention peut être quantifiée au moyen d'un test spécifique de désagglomération.

Le test de désagglomération est réalisé selon le protocole suivant:

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre 4cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur un longeur de 4 cm, on règle la puissance de sortie de manière à obtenir une déviation de l'aiguille du cadran de puissance indiquant 20 % (ce qui correspond à une énergie dissipée par l'embout de la sonde de 120 Watt/cm$^2$). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian $\emptyset_{50}$ que l'on obtient est d'autant plus faible que la silice présente une aptitude à la désagglomération élevée. On détermine également le rapport (10 x volume de suspension introduite)/densité optique de la suspension détectée par le granulomètre (cette densité optique est de l'ordre de 20 %). Ce rapport est indicatif du taux de fines, c'est-à-dire du taux de particules inférieures à 0,1 μm qui ne sont pas détectées par le granulomètre. Ce rapport appelé facteur de désagglomération aux ultra-sons ($F_D$) est d'autant plus élevé que la silice présente une aptitude à la désagglomération élevée.

De préférence, la silice sous forme de poudre selon l'invention présente un facteur de désagglomération aux ultra-sons supérieur à 6 ml, notamment à 6,5 ml.

Elle présente également, de préférence, un diamètre médian ($\emptyset_{50}$) inférieur à 4,5 μm, en particulier inférieur à 4 μm, après désagglomération aux ultra-sons.

Même après mise en forme, les excellentes propriétés intrinsèques des poudres de silice selon l'invention sont conservées.

Il est aussi proposé, selon l'invention, une nouvelle silice précipitée caractérisée en ce qu'elle se présente sous forme de billes (ou perles) sensiblement sphériques ayant une surface spécifique BET comprise entre environ 140 et 200 m$^2$/g, une surface spécifique CTAB comprise entre environ 140 et 200 m$^2$/g, une taille moyenne d'au moins 80 μm et une distribution poreuse telle que le volume poreux constitué par les pores dont le diamètre est compris entre 175 Å et 275 Å représente au moins 50 % du volume poreux constitué par les pores de diamètres inférieurs ou égaux à 400 Å.

Comme indiqué ci-avant, une telle silice sous forme de billes sensiblement sphériques, avantageusement pleines, homogènes, peu poussièrantes et de bonne coulabilité, présente une très bonne aptitude à la désagglomération et à la dispersion. En outre, elle présente d'excellentes propriétés renforçantes. Une telle silice constitue également un précurseur privilégié pour la synthèse des poudres et des granulés selon l'invention.

Certaines des caractéristiques, de type structurel, des billes (ou perles) selon l'invention vont maintenant être décrites.

Ces billes présentent une surface spécifique BET comprise entre environ 140 et 200 m$^2$/g. De préférence, elle est comprise entre 150 et 190 m$^2$/g.

Leur surface spécifique CTAB est, quant à elle, également comprise entre environ 140 et 200 m$^2$/g. De préférence, elle est comprise entre 140 et 180 m$^2$/g.

Selon un mode de réaiisation particulier et préféré, ces billes présentent un rapport surface spécifique BAT/surface spécifique CTAB compris entre 1,0 et 1,2, c'est-à-dire qu'elles sont faiblement microporeuses.

Leur prise d'huile DOP est généralement comprise entre 180 et 400 ml/100g, de préférence entre 200 et 350 ml/100g.

Leur densité de remplissage à l'état tassé (DRT) est en général d'au moins 0,17, et, par exemple comprise entre 0,2 et 0,32.

Les billes de silice selon l'invention présentent une taille moyenne d'au moins 80 μm.

Selon certaines variantes de l'invention, cette taille moyenne est d'au moins 100 μm, par exemple d'au moins 150 μm ; elle est généralement d'au plus 300 μm et se situe de préférence entre 100 et 270 μm. Cette taille moyenne est déterminée selon la norme NF X 11507 (décembre 1970) par tamisage à sec et détermination du diamètre correspondant à un refus cumulé de 50 %.

Pour ce qui est des caractéristiques de porosité des billes de silice selon l'invention, ces dernières présentent habituellement un volume poreux total d'au moins 2,5 cm$^3$/g, généralement compris entre 3 et 5 cm$^3$/g.

Comme pour les granulés et les poudres décrits ci-avant, l'une des caractéristiques essentielles des billes de silice selon l'invention réside dans la répartition de leur volume poreux. L'analyse des programmes des billes selon l'invention montre que le volume poreux constitué par les pores dont le diamètre est compris entre 175 Å et 275 Å représente à lui seul au moins 50 % du volume poreux qui est généré par les pores de diamètres inférieurs ou égaux à 400 A (volume poreux utile). De préférence, le volume poreux précité constitue au moins 60 % dudit volume poreux utile.

Comme pour les granulés et les poudres, il est possible de caractériser ces billes par un test de broyase et un test de viscosité tels qu'ils ont été définis ci-avant dans la description.

Ainsi, après un premier broyage opéré sur celles-ci, on obtient une poudre présentant un diamètre médian ($D_{50}$) de préférence inférieur à 8,5 μm et une viscosité BROOKFIELD de préférence d'au moins 13 Pa.s, généralement d'au moins 15 Pa.s.

En outre, après plusieurs broyages successifs et identiques, les billes conduisent à des poudres pour lesquelles on note une croissance régulière et extrêmement significative de la viscosité BROOKFIELD, cette dernière pouvant être d'au moins 30 Pa.s. En d'autres termes, lesdites billes peuvent être broyées jusqu'à l'obtention d'une poudre présentant une viscosité BROOKFIELD d'au moins 30 Pa.s.

Comme pour les poudres, il est possible de caractériser ces billes par un test de désagglomération tel qu'il a été défini ci-avant dans la description.

Ainsi, la silice sous forme de billes sensiblement sphériques selon l'invention présente de préférence un facteur de désagglomération aux ultra-sons supérieur à 5,5 ml, notamment à 6,4 ml.

Elle présente également, de préférence, un diamètre médian ($\varnothing_{50}$) inférieur à 5 $\mu$m, en particulier inférieur à 4,5 $\mu$m, après désagglomération aux ultra-sons.

Les silices selon l'invention peuvent être par exemple obtenues selon l'une des variantes appropriées du procédé de préparation conforme à l'invention et décrit précédemment.

Les silices selon l'invention ou celles susceptibles d'être obtenues par le procédé selon l'invention trouvent une application particulièrement intéressante dans le renforcement des élastomères, naturels ou synthétiques, et notamment des pneumatiques.

Elles confèrent à ces derniers notamment une amélioration significative des résistances à la rupture, au déchirement et à l'abrasion, ce qui est particulièrement utile notamment pour la fabrication des bandes de roulement des pneumatiques.

Les exemples suivants illustrent l'invention sans toutefois en limiter la portée.

EXEMPLE 1

Dans un réacteur en acier inoxydable muni d'un système d'agitation par hélices et d'un chauffage par double enveloppe, on introduit :

- 660 litres d'eau
- 11,8 Kg de $Na_2SO_4$ (électrolyte)
- 323 litres de silicate de sodium aqueux, présentant un rapport pondéral $SiO_2/Na_2O$ égal à 3,45 et une densité à 20°C égale à 1,230.

La concentration en $SiO_2$ dans le pied de cuve est alors de 77 g/l. Le mélange est alors porté à une température de 82°C tout en le maintenant sous agitation. On y introduit alors 395 litres d'acide sulfurique dilué de densité à 20°C égale à 1,050 jusqu'à obtenir dans le milieu réactionnel une valeur de pH (mesurée à sa température) égale à 7,5. La température de réaction est de 82°C pendant les 15 premières minutes de la réaction ; elle est ensuite portée de 82 à 95°C en 15 minutes environ, puis maintenue à 95°C jusqu'à la fin de la réaction.

On introduit ensuite conjointement dans le milieu de réaction 77 litres de silicate de sodium aqueux du type décrit ci-avant et 106 litres d'acide sulfurique, également du type décrit ci-avant, cette introduction simultanée d'acide et de silicate étant réalisée de manière telle que le pH du milieu de réaction, pendant la période d'introduction, soit constamment égal à 7,5 ± 0,1. Après introduction de la totalité du silicate, on continue à introduire de l'acide dilué à un débit de 310 l/h, et ceci pendant 5 minutes.

Cette introduction complémentaire d'acide amène alors le pH du milieu à une valeur égale à 5,0.

La durée totale de la réaction est fixée à 85 mn.

On obtient ainsi une bouillie de silice précipitée qui est filtrée et lavée au moyen d'un filtre presse de telle sorte que l'on récupère finalement un gâteau de silice dont la perte au feu est de 79 % (donc un taux de matière sèche de 21 % en poids).

Ce gâteau est ensuite fluidifié par action mécanique et chimique (ajout d'une quantité d'aluminate de sodium correspondant à un rapport pondéral $Al/SiO_2$ de 3000 ppm). Après cette opération de délitage, on obtient un gâteau pompable, de pH égal à 6,3, qui est alors atomisé au moyen d'un atomiseur à buses.

Le produit ainsi séché est ensuite broyé (broyeur à percussion FORPLEX type FL1 ; vitesse de rotation : 4900 t/mn) pour obtenir une granulométrie moyenne ($D_{50}$) de l'ordre de 16 $\mu$m.

Les caractéristiques de la silice P1 sous forme de poudre (conforme à l'invention) obtenue sont alors les suivantes

| - surface spécifique BET | = 170 $m^2$/g |
| --- | --- |

(suite)

| - surface spécifique CTAB | = 160 m$^2$/g |
|---|---|
| - prise d'huile DOP | = 300 ml/100 g |
| - DRT | = 0,22 |
| - volume poreux V1 représenté par les pores de d<400 Å | = 0,95 cm$^3$/g |
| - volume poreux V2 représenté par les pores 175 Å<d<275 Å | = 0,54 cm$^3$/g |
| -rapport V2/V1 | = 57 % |

On soumet la silice P1 aux tests de broyage et de rhéologie tels que définis précédemment dans la description (broyeur RETSCH ; débit 1,5 kg/h ; grille 0,5 mm).

Après un seul passage dans le broyeur, le diamètre médian ($D_{50}$) de la poudre broyée obtenue est alors de 6,1 μm. La viscosité BROOKFIELD de cette poudre broyée est de 32 Pa.s.

On soumet la silice P1 également au test de désagglomération tel que défini précédemment dans la description.

Après désagglomération aux ultra-sons, la poudre P1 présente un diamètre médian ($\varnothing_{50}$) de 3,2 μm et un facteur de désagglomération aux ultra-sons ($F_D$) de 8,5 ml.

EXEMPLE 2

A titre comparatif, deux silices commerciales très courantes vendues sous forme de poudre par la Société DEGUSSA comme charges renforçantes pour élastomères, ont été étudiées :

-    la poudre SIPERNAT$^®$ 22 (PC1)
-    la poudre ULTRASIL VN3$^®$ (PC2)

Les caractéristiques de ces poudres sont rassemblées dans le tableau I ci-dessous. Ce tableau reprend également, pour comparaison, les caractéristiques de la poudre P1 selon l'invention.

TABLEAU I

|  | PC1 | PC2 | P1 |
|---|---|---|---|
| s.s BET (m$^2$/g) | 180 | 170 | 170 |
| s.s CTAB (m$^2$/g) | 160 | 155 | 160 |
| prise d'huile DOP (ml/100g) | 300 | 260 | 300 |
| DRT | 0,27 | 0,20 | 0,22 |
| V1 (cm$^3$/g) | 0,84 | 0,93 | 0,95 |
| V2 (cm$^3$/g) | 0,36 | 0,43 | 0,54 |
| V2/V1 (%) | 43 | 46 | 57 |
| $D_{50}$ après 1 passage (μm) | 9,8 | 7,6 | 6,1 |
| viscosité BROOKFIELD (Pa.s.) | 14 | 17 | 32 |
| $\varnothing_{50}$ (μm) | 7,4 | 9,9 | 3,2 |
| facteur désagglomération $F_D$ (ml) | 3,0 | 2,3 | 8,5 |

EXEMPLE 3

A partir de la poudre de silice P1 de l'exemple 1, on a préparé des granulés par compactage au moyen d'une presse à rouleaux.

Les poudres ont été préalablement désaérées à l'aide d'un pré-densifieur à rouleaux VACUPRESS 160/220. Les poudres désaérées sont ensuite introduites en continu et à débit constant dans une presse à compacter ALEXANDERWERCK WP 150/120 (diamètre des rouleaux : 150 mm ; longueur des rouleaux : 120 mm ; vitesse de rotation des rouleaux : 12 t/mn), équipée en sortie de presse d'un système de calibrage réglé de manière à obtenir des produits compactés de l'ordre de 2 à 4 mm. Ces produits sont ensuite passés sur un tamis vibrants RHEVUM (grille d'ouverture : 1,5 x 4 mm) pour les séparer des fines.

En suivant le mode opératoire ci-dessus, on a préparé trois lots de granulés selon l'invention, en faisant seulement varier la pression de compactage imposée par les rouleaux de la presse à compacter. On dispose ainsi :

- d'un lot de granulés compactés sous 20 bars : GR 20
- d'un lot de granulés compactés sous 25 bars : GR 25
- d'un lot de granulés compactés sous 30 bars : GR 30

Les caractéristiques de ces granulés sont rassemblées dans le tableau II. On a également porté dans ce tableau les résultats concernant les tests de broyage et de viscosité BROOKFIELD après un seul passage au broyeur RETSCH.

TAUXM est la valeur du taux d'attrition des granulés, mesuré selon le test tel que précédemment défini dans la description.

TABLEAU II

|  | GR20 | GR25 | GR30 | GRC1 | GRC2 |
|---|---|---|---|---|---|
| s.s BET ($m^2$/g) | 170 | 170 | 170 | 180 | 170 |
| s.s CTAB ($m^2$/g) | 155 | 155 | 155 | 162 | 151 |
| prise d'huile DOP (ml/100g) | 250 | 230 | 210 | 220 | 210 |
| DRT | 0,28 | 0,29 | 0,30 | 0,35 | 0,36 |
| V1 ($cm^3$/g) | 0,88 | 0,88 | 0,88 | 0,89 | 0,88 |
| V2 ($cm^3$/g) | 0,60 | 0,57 | 0,60 | 0,47 | 0,41 |
| V2/V1 (%) | 68 | 65 | 68 | 53 | 53 |
| TAUXM (%) | 17,6 | 14,6 | 12,8 | 11,2 | 13 |
| $D_{50}$ après 1 passage (µm) | 6,6 | 6,9 | 6,9 | 8,9 | 9,6 |
| viscosité BROOKFIELD (Pa.s.) | 17 | 16 | 12 | 7 | 6 |

EXEMPLE 4

A titre comparatif, deux lots de granulés de silice commerciaux (procédés de préparation non connus) ont été étudiés :

- les granulés ULTRASIL VN3 GRANULAR[®], commercialisés par la Société DEGUSSA (GRC1)
- les granulés KS 404 GRANULAR[®], commercialisés par la Société AKZO (GRC2)

Les caractéristiques de ces granulés ont été rassemblées dans le tableau II donné ci-avant.

EXEMPLE 5

Dans cet exemple, on a comparé l'évolution des diamètres moyens ($D_{50}$) d'une part, et des viscosités BROOKFIELD correspondantes d'autre part, des poudres obtenues après plusieurs broyages successifs (selon les tests tels que définis dans la description), et ceci pour les granulés GR25 (invention) et les granulés GRC1 (comparatif).

Les résultats sont rassemblés dans le tableau III ci-dessous.

TABLEAU III

| Nombre de broyages | $D_{50}(\mu m)$ | | Viscosité BROOKFIELD (Pa.s) | |
|---|---|---|---|---|
| | GR25 | GRC1 | GR25 | GRC1 |
| 1 | 6,9 | 8,9 | 16 | 7 |
| 2 | 5,1 | 8,7 | 19 | 7 |
| 3 | 4,7 | 8,6 | 25 | 8 |
| 4 | 4,3 | 8,4 | 27 | 7 |
| 5 | 4,1 | 8,3 | 33 | 7 |

EXEMPLE 6

Cet exemple illustre l'utilisation et le comportement des granulés selon l'invention et des granulés de l'art antérieur dans une formulation pour caoutchouc industriel.

On a utilisé la formulation ci-dessous (en parties, en poids) :

| | |
|---|---|
| Caoutchouc S.B.R. 1509[1] | 100 |
| Granulés de silice | 50 |
| PERMANAX OD[2] | 2 |
| PEG 4000[3] | 3 |
| ZnO ACTIF[4] | 3 |
| Acide stéarique | 3 |
| Silane Si 69[5] | 5 |
| Soufre[6] | 2,25 |
| MBTS[7] | 0,75 |
| DOTG[8] | 1,50 |

(1) copolymère Styrène Butadiène
(2) Diphénylamine octylée (antioxydant)
(3) Polyéthylèneglycol (agent d'interface silice/caoutchouc)
(4) oxyde de zinc qualité caoutchouc (activateur)
(5) agent de couplage silice/caoutchouc (produit commercialisé par DEGUSSA)
(6) agent vulcanisant
(7) disulfure de benzothiazyl (accélérateur de vulcanisation)
(8) diorthotolylguanidine (accélérateur de vulcanisation)

Les formulations sont préparées de la manière suivante :

Dans un mélangeur interne (type BANBURY), on introduit dans cet ordre et aux temps indiqués entre parenthèses :

- du SBR 1509 (to)
- le PEG 4000, le ZnO actif, le Si 69, le PERMANAX OD et les 2/3 de la silice (to + 1 mn)
- l'acide stéarique et le reste de silice (to + 2 mn 30 s)
- les accélérateurs MBTS et DOTG sous forme de mélange maître dans du SBR 1509 (to + 4 mn)

La décharge du mélangeur se fait quand la température de la chambre atteint 130°C (i.e, à peu près à to + 5 mn). Le mélange est introduit dans un mélangeur à cylindres, maintenu à 40°C, pour y être calendré. Dans ce mélangeur, on introduit le soufre sous la forme d'un mélange maître dans du SBR 1509. Après homogénéisation et trois passages au fin, le mélange final est calandré sous la forme de feuilles de 2,5 à 3 mm d'épaisseur.

Les résultats des essais sont les suivants :

1 - Propriétés rhéologiques

Les mesures sont réalisées sur les formulations à l'état cru. Les résultats sont reportés dans le tableau IV. On a indiqué l'appareillage utilisé pour conduire les mesures.

TABLEAU IV

|  | GR20 | GR25 | GR30 | GRC1 | GRC2 |
|---|---|---|---|---|---|
| Consistance MOONEY [1] | 56,5 | 55 | 53,5 | 61 | 64 |
| couple mini [2] | 8 | 7 | 8 | 10 | 10 |
| couple maxi [2] | 100 | 103 | 102 | 106 | 100 |
| module élastique [3] | 1,45 | 1,40 | 1,35 | 1,75 | 1,65 |
| module visqueux [3] | 1,25 | 1,20 | 1,25 | 1,45 | 1,40 |

(1) viscosimètre MOONEY
(2) Rhéomètre MONSANTO 100 S
(3) Rhéomètre MONSANTO MDR 2000E

Les formulations obtenues à partir des granulés selon l'invention consuisent systématiquement aux valeurs les plus faibles, tant pour ce qui est de la viscosité MOONEY que du couple mini et des modules élastiques et visqueux.
Ceci traduit une plus grande facilité de mise en oeuvre des mélanges préparés à partir des granulés selon l'invention, en particulier au niveau des opérations d'extrusion et de calandrage souvent réalisées lors de la confection des pneumatiques (moindre dépense d'énergie pour mettre en oeuvre le mélange, plus grande facilité d'injection lors du mélange, moindre gonflement en filière lors de l'extrusion, moindre retrait au calandrage, etc...).

2- Propriétés mécaniques

Les mesures sont réalisées sur les formulations vulcanisées.
La vulcanisation est obtenue en portant les formulations à 150°C pendant 15 minutes.
Les normes suivantes ont été utilisées :

(i) essais de traction (modules, résistance à la rupture) :
NFT 46.002 ou ISO 37-1977
(ii) essais de déchirement angulaire (100°C) :
NFT 46-007
(iii) essai de résistance à l'abrasion
DIN 53-516

Les résultats obtenus sont consignés dans le tableau V.

TABLEAU V

|  | GR20 | GR25 | GR30 | GRC1 | GRC2 |
|---|---|---|---|---|---|
| module 100% (MPa) | 3,2 | 3,0 | 3,1 | 3,4 | 3,2 |
| module 300 % (MPa) | 11,0 | 10,4 | 11,0 | 9,6 | 9,2 |
| indice de renforcement [1] | 3,4 | 3,4 | 3,5 | 2,8 | 2,8 |
| résistance rupture (MPa) | 20,4 | 20,4 | 21,3 | 18,6 | 16,7 |
| résistance abrasion [2] | 91 | 97 | 93 | 113 | 109 |
| résistance au déchirement angulaire à 100°C (DaN/cm) | 43 | 42 | 36 | 31 | 31,5 |

(1) correspond au rapport : module 300 %/module 100 %
(2) plus la valeur mesurée est faible et meilleure est la résistance à l'abrasion.

Ces derniers résultats mettent clairement en évidence le meilleur effet de renforcement conféré par les granulés selon l'invention par rapport à des granulés de l'art antérieur de pouvoir renforçant théorique pourtant équivalent.

Les granulés selon l'invention conduisent aux modules 100 % les plus faibles, preuve d'une meilleure dispersion de la silice, mais également aux modules 300 % les plus élevés, preuve d'une plus grande densité d'interactions silice/caoutchouc ; ils consuisent en conséquence aux indices de renfort les plus importants.

Concernant la résistance à l'abrasion, on note que la perte par abrasion est réduite de 10 à 20 % par rapport aux granulés comparatifs. Il s'agit là d'un avantage très important pour l'application pneumatique.

Le plus haut pouvoir renforçant des granulés selon l'invention est également confirmé par les valeurs plus élevées obtenues pour la résistance à la rupture et au déchirement.

EXEMPLE 7

Dans un réacteur en acier inoxydable muni d'un système d'agitation par hélices et d'un chauffage par double enveloppe on introduit :

- 772 litres d'eau
- 11 kg de $Na_2SO_4$ (électrolyte)
- 211 litres de silicate de sodium aqueux, présentant un rapport pondéral $SiO_2/Na_2O$ égal à 3,45 et une densité à 20°C égale à 1,230.

La concentration en $SiO_2$ dans le pied de cuve est alors de 50 g/l. Le mélange est alors porté à une température de 90°C tout en le maintenant sous agitation. L'ensemble de la réaction est effectué à 90°C. On introduit dans le élange 275 litres d'acide sulfurique dilué de densité à 20°C égale à 1,050, jusqu'à obtenir dans le milieu réactionnel une valeur de pH égale à 7,5 (mesurée à 90°C).

On introduit ensuite conjointement dans le milieu de réaction 53 litres de silicate de sodium aqueux du type décrit ci-avant et 79 l d'acide sulfurique, également du type décrit ci-avant, cette introduction simultanée d'acide et de silicate étant réalisée de manière telle que le pH du milieu de réaction, soit constamment égal à 7,5 ± 0,1. Après introduction de la totalité du silicate on continue à introduire de l'acide dilué de façon à amener le pH du milieu réactionnel à une valeur égale à 5,0.

La durée totale de la réaction est de 125 mm.

On obtient ainsi une bouillie de silice précipitée qui est filtrée et lavée au moyen d'un filtre rotatif sous vide de telle sorte que l'on récupère finalement un gâteau de silice dont la perte au feu est de 88 % (donc un taux de matière sèche de 12 % en poids).

Ce gâteau est ensuite fluidifié par simple action mécanique. La bouillie résultante est alors atomisée au moyen d'un atomiseur à turbines.

Les caractéristiques de la silice P2 sous forme de poudre (conforme à l'invention) obtenue sont alors les suivantes :

| | |
|---|---|
| - surface spécifique BET | = 155 m$^2$/g |
| - surface spécifique CTAB | = 149 m$^2$/g |
| - prise d'huile DOP | = 330 ml/100g |
| - DRT | = 0, 18 |
| - volume poreux $V_1$ représenté par les pores de d<400 Å | = 1,0 cm$^3$/g |
| - volume poreux $V_2$ représenté par les pores 175 Å<d<275 Å | = 0, 67 cm$^3$/g |
| - rapport $V_2/V_1$ | = 67 % |

On soumet la silice P2 aux tests de broyage et de rhéologie tels que définis précédemment dans la description (broyeur RETSCH ; débit 1,5 Kg/h ; grille 0,5 mm).

Après un seul passage dans le broyeur, le diamètre médian ($D_{50}$) de la poudre broyée obtenue est de 3,7 µm. La viscosité BROOKFIELD de cette poudre broyée est de 34 Pa.s.

On soumet la silice P2 également au test de désagglomération tel que défini précédemment dans le description.

Après désagglomération aux ultra-sons, la poudre P2 présente un diamètre médian ($\varnothing_{50}$) de 2,7 µm et un facteur de désagglomération aux ultra-sons ($F_D$) de 9,5 ml.

EXEMPLE 8

Dans un réacteur en acier inoxydable muni d'un système d'agitation par hélices et d'un chauffage par double enveloppe on introduit :

- 669 litres d'eau
- 11 kg de $Na_2SO_4$ (électrolyte)
- 314 litres de silicate de sodium aqueux présentant un rapport pondéral $SiO_2/Na_2O$ égal 3,45 et une densité à 20°C égale à 1,230.

La concentration en $SiO_2$ dans le pied de cuve est alors de 75 g/l. Le mélange est alors porté à une température de 80°C tout en le maintenant sous agitation. On y introduit alors 400 l d'acide sulfurique dilué de densité à 20°C égale à 1,050 jusqu'à obtenir dans le milieu réactionnel une valeur de pH égale à 7,5. La température est de 80°C pendant les 45 premières minutes de réaction ; elle est ensuite portée de 80°C à 85°C en moins de 10 minutes, puis maintenue à 85°C jusqu'à la fin de la réaction.

Une fois la valeur du pH égale à 7 atteinte, on introduit conjointemant dans le milieu réactionnel 76 litres de silicate de sodium aqueux du type décrit ci-avant et 120 l d'acide sulfurique, également du type décrit ci-avant, cette introduction simultanée d'acide et de silicate étant réalisée de manière telle que le pH du milieu de réaction pendant la période d'introduction soit constamment égal à $7,5 \pm 0,1$. Après introduction de la totalité du silicate, on continue à introduire de l'acide dilué, pendant une durée de 10 minutes environ de façon à amener le pH du milieu réactionnel à une valeur égale à 4,5. La durée totale de la réaction est de 120 mn.

On obtient ainsi une bouillie de silice précipitée qui est filtrée et lavée au moyen d'un filtre rotatif sous vide de telle sorte que l'on récupère finalement un gâteau de silice dont la perte au feu est de 87 % (donc un taux de matière sèche de 13 % en poids).

Le gâteau est ensuite fluidifié par action mécanique et chimique (ajout d'une quantité d'aluminate de sodium correspondant à un rapport pondéral $Al/SiO_2$ de 4000 ppm). Après cette opération de délitage, le pH du gâteau est de 6,5. Ce gâteau est atomisé au moyen d'un atomiseur à turbines.

Les caractéristiques de la silice P3 sous forme de poudre (conforme à l'invention) obtenue sont alors les suivantes :

**16**

| | |
|---|---|
| - surface spécifique CTAB | = 180 m²/g |
| - surface spécifique BET | = 190 m²/g |
| - prise d'huile DOP | = 345 ml/100g |
| - DRT | = 0, 17 |
| - volume poreux $V_1$ représenté par les pores de d<400 Å | = 0,98 cm³/g |
| - volume poreux $V_2$ représenté par les pores 175 Å<d<275 Å | = 0, 64 cm³/g |
| - rapport $V_2/V_1$ | = 65 % |

On soumet la silice P3 aux tests de broyage et de rhéologie tels que définis précédemment dans la description (broyeur RESTCH : débit 1,5 kg/h ; grille 0,5 mm).

Après un seul passage dans le broyeur le diamètre médian ($D_{50}$) de la poudre broyée obtenue est de 6,5 μm. La viscosité BROOKFIELD de cette poudre broyée est de 25 Pa.s.

On soumet la silice P3 également au test de désagglomération tel que défini précédemment dans la description.

Après désagglomération aux ultra-sons, la poudre P3 présente un diamètre médian ($\varnothing_{50}$) de 3,6 μm et un facteur de désagglomération aux ultra-sons ($F_D$) de 7,1 ml.

EXEMPLE 9

On réalise la précipitation comme décrit à l'exemple 1.

La bouillie de silice précipitée obtenue est filtrée au moyen d'un filtre rotatif sous vide de telle sorte que l'on récupère un gâteau de silice dont la perte au feu est de 86 % (donc un taux de matière sèche de 14 % en poids).

Ce gâteau est ensuite fluidifié par action mécanique et chimique (ajout d'une quantité d'aluminate de sodium correspondant à un rapport pondéral Al/SiO$_2$ de 3000 ppm). Après cette opération de délitage, le pH du gâteau est de 6,4. Ce gâteau est atomisé au moyen d'un atomiseur à turbines.

Les caractéristiques de la silice P4 sous forme de poudre (conforme à l'invention) obtenue sont alors les suivantes :

| | |
|---|---|
| - surface spécifique CTAB | = 162 m²/g |
| - surface spécifique BET | = 165 m²/g |
| - prise d'huile DOP | = 345 ml/100g |
| - DRT | = 0, 18 |
| - volume poreux $V_1$ représenté par les pores de d<400 Å | = 0,90 cm³/g |
| - volume poreux $V_2$ représenté par les pores 175 Å<d<275 Å | = 0, 60 cm³/g |
| - rapport $V_2/V_1$ | = 66 % |

On soumet la silice P4 aux tests de broyage et de rhéologie tels que définis précédemment dans la description (broyeur RETSCH ; débit 1,5 kg/h ; grille 0,5 mm).

Après un seul passage dans le broyeur le diamètre médian ($D_{50}$) de la poudre obtenue est de 5,7 μm. La viscosité BROOKFIELD de cette poudre broyée est de 32 Pa.s.

On soumet la silice P4 également au test de désagglomération tel que défini précédemment dans la description.

Après désagglomération aux ultra-sons, la poudre P4 présente un diamètre médian ($\varnothing_{50}$) de 2,5 μm et un

facteur de désagglomération aux ultra-sons ($F_D$) de 10,5 ml.

EXEMPLE 10

Cet exemple illustre l'utilisation et le comportement d'une poudre selon l'invention et d'une poudre de l'art antérieur dans une formulation pour caoutchouc industriel.

On a utilisé la formulation suivante (en parties, en poids) :

| | |
|---|---|
| - Caoutchouc S.B.R. 1509[1] | 40 |
| - Caoutchouc S.B.R. 1778[2] | 60 |
| - Silice | 35 |
| - ZnO actif[3] | 3 |
| - Acide stéarique | 0,7 |
| - C.B.S[4] | 2,3 |
| - D.P.G[5] | 1 |
| - Soufre[6] | 1,5 |
| - Silane Si69[7] | 3,5 |

(1) Copolymère styrène butadiène type 1509
(2) Copolymère styrène butadiène type 1778
(3) Oxyde de zinc qualité caoutchouc
(4) N-cyclohexyl 2-benzothiazyl sulfènamide
(5) Diphenyl guanidine
(6) agent vulcanisant
(7) agent de couplage silice/caoutchouc (produit commercialisé par DEGUSSA)

Les formulations sont préparées de la façon suivante :

Dans un mélangeur interne (type BANBURY), on introduit dans cet ordre et aux temps indiqués entre parenthèses :

- du SBR 1509 et du SBR 1778 (to)
- le Zn0 actif, le Si69 et les 2/3 de la silice (to + 1mn)
- l'acide stéarique et le reste de la silice (to + 2mn 30s)
- les accélérateurs CBS et DPG (to + 4mn)

La décharge du mélangeur se fait quand la température de la chambre atteint 130°C (c'est-à-dire, à peu près 5mn). Le mélange est introduit dans un mélangeur à cylindres, maintenu à 40°C, pour y être calandré. Dans ce mélangeur on introduit le soufre.

Après homogénéisation et trois passages au fin, le mélange final est calandré sous la forme de feuilles de 2,5 à 3 mm d'épaisseur.

Les résultats des essais sont les suivants :

1- Propriétés rhéologiques

Les mesures sont réalisées sur les formulations à l'état cru à 150°C.

Les résultats sont reportés dans le tableau VI. On a indiqué l'appareillage utilisé pour conduire les mesures.

TABLEAU VI

|  | P4 | PC2 |
|---|---|---|
| Couple mini[1] | 9,3 | 12,4 |
| Couple maxi[1] | 86,5 | 90,6 |

(1) Rhéomètre MONSANTO
100 S

La formulation obtenue à partir de poudre selon l'invention conduit aux valeurs les plus faibles.

Cela traduit une plus grande facilité de mise en oeuvre des mélanges préparés à partir de poudre de silice selon l'invention.

2- Propriétés mécaniques

Les mesures sont réalisées sur les formulations vulcanisées.

La vulcanisation est obtenue en portant les formulations à 150°C pendant 15 minutes.

Les normes utilisées ont été indiquées dans l'exemple 6.

Les résultats obtenus sont consignés dans le tableau VII.

TABLEAU VII

|  | P4 | PC2 |
|---|---|---|
| module 100 % (MPa) | 2 | 2,4 |
| module 300 % (MPa) | 8,4 | 7,6 |
| indice de renforcement[1] | 4,2 | 3,2 |
| résistance rupture (MPa) | 12,8 | 9,7 |
| résistance abrasion[2] | 78 | 97 |

(1) correspond au rapport : module 300 %/module 100 %
(2) plus la valeur mesurée est faible et meilleure est la résistance à l'abrasion

Les résultats ci-dessus mettent clairement en évidence le meilleur effet de renforcement conféré par la poudre selon l'invention.

La poudre selon l'invention conduit à un module 100 % plus faible, preuve d'une meilleure dispersion de la silice, mais également à un module 300 % plus élevé, preuve d'une plus grande densité d'intéraction silice/caoutchouc ; elle conduit ainsi à un indice de renforcement plus important.

Concernant la résistance à l'abrasion, on note que la perte à l'abrasion est réduite de près de 20 % par rapport à la poudre de l'art antérieur.

Le plus haut pouvoir renforçant de la silice sous forme de poudre selon l'invention est également confirmé par les valeurs élevées obtenues pour la résistance à la rupture et au déchirement.

EXEMPLE 11

Dans un réacteur en acier inoxydable muni d'un système d'agitation par hélices et d'un chauffage par double enveloppe on introduit :

- 346 litres d'eau
- 7,5 kg de $Na_2SO_4$ (électrolyte)
- 587 litres de silicate de sodium aqueux présentant un rapport pondéral $SiO_2/Na_2O$ égal à 3,50 et une densité à 20°C égale à 1,133.

La concentration en $SiO_2$ dans le pied de cuve est alors de 85 g/l. Le mélange est porté à 79°C tout en le maintenant sous agitation. On introduit ensuite dans le mélange 386 litres d'acide sulfurique dilué de densité à 20°C égale à 1,050, jusqu'à obtenir une valeur de pH égale à 8 (mesurée à la température du milieu). La température du milieu réactionnel est de 79°C pendant les 25 premières minutes, puis elle est portée de 79°C à 86°C en 15 mn, et maintenu ensuite à 86°C jusqu'à la fin de la réaction.

Une fois la valeur du pH égale à 8 atteinte, on introduit conjointement dans le milieu de réaction 82 litres de silicate de sodium aqueux de rapport pondéral $SiO_2/Na_2O$ égal à 3,50 et de densité à 20°C égale à 1,133 et 132 litres d'acide du type décrit ci-avant, cette introduction simultanée d'acide et de silicate étant réalisée de manière telle que le pH du milieu de réaction soit constamment égal à $8 \pm 0,1$. Après introduction de la totalité du silicate on continue à introduire l'acide dilué pendant 9 mn de façon à amener le pH du milieu réactionnel à une valeur égale à 5,2. On arrête alors l'introduction d'acide et on maintient la bouillie réactionnelle 5 mn supplémentaires sous agitation.

La durée totale de la réaction est de 118 mn.

On obtient une bouillie de silice précipitée qui est filtrée et lavée au moyen d'un filtre-presse de telle sorte que l'on récupère finalement un gâteau de silice dont la perte au feu est de 78,5 % (donc un taux de matière sèche de 21,5 % en poids).

Ce gâteau est ensuite fluidifié par action mécanique et chimique (ajout d'une quantité d'aluminate de sodium correspondant à un rapport pondéral $Al/SiO_2$ de 3000 ppm). Après cette opération de délitage, on obtient un gâteau pompable de pH égal à 6,5 qui est alors atomisé au moyen d'un atomiseur à buses.

Les caractéristiques de la silice obtenue P5 sous forme de billes sensiblement sphériques (conforme à l'invention) sont alors les suivantes :

| | |
|---|---|
| - surface spécifique CTAB | = 158 m$^2$/g |
| - surface spécifique BET | = 166 m$^2$/g |
| - prise d'huile DOP | = 270 ml/100g |
| - DRT | = 0, 28 |
| - volume poreux $V_1$ représenté par les pores de d<400 Å | = 0,92 cm$^3$/g |
| - volume poreux $V_2$ représenté par les pores 175 Å<d<275 Å | = 0, 57 cm$^3$/g |
| - rapport $V_2/V_1$ | = 62 % |
| - taille moyenne des billes | = 270 μm |

On soumet la silice P5 aux tests de broyage et de rhéologie tels que définis précédemment dans la description (broyeur RETSCH ; débit 1,5 kg/h ; grille 0,5 mm).

Après un seul passage dans le broyeur le diamètre médian ($D_{50}$) de la poudre broyée obtenue est de 8,4 μm. La viscosité BROOKFIELD de cette poudre broyée est de 19 Pa.s.

On soumet la silice P5 également au test de désagglomération tel que défini précédemment dans le description.

Après désagglomération aux ultra-sons, la poudre P5 présente un diamètre médian ($\varnothing_{50}$) de 3,6 μm et un facteur de désagglomération aux ultra-sons ($F_D$) de 6,8 ml.

EXEMPLE 12

On réalise la précipitation comme décrit à l'exemple 1.

La bouillie de silice précipitée obtenue est également filtrée au moyen d'un filtre-presse de telle sorte que l'on récupère un gâteau de silice dont la perte au feu est de 79 % (donc un taux de matière sèche de 21 % en poids).

Ce gâteau est ensuite fluidifié par action mécanique et chimique (ajout d'une quantité d'aluminate de sodium correspondant à un rapport pondéral $Al/SiO_2$ de 3000 ppm). Après cette opération de délitage, on obtient un gâteau pompable, de pH égal à 6,3 qui est alors atomisé au moyen d'un atomiseur à buses.

Les caractéristiques de la silice obtenue P6 sous forme de billes sensiblement sphériques (conforme à l'invention) sont alors les suivantes :

| - surface spécifique CTAB | = 160 m$^2$/g |
|---|---|
| - surface spécifique BET | = 170 m$^2$/g |
| - prise d'huile DOP | = 276 ml/100g |
| - DRT | = 0, 28 |
| - volume poreux V$_1$ représenté par les pores de d<400 Å | = 0,90 cm$^3$/g |
| - volume poreux V$_2$ représenté par les pores 175 Å<d<275 Å | = 0, 55 cm$^3$/g |
| - rapport V$_2$/V$_1$ | = 61 % |
| - taille moyenne des billes | = 260 µm |

On soumet la silice P6 aux tests de broyage et de rhéologie tels que définis précédemment dans la description (broyeur RETSCH ; débit 1,5 kg/h ; grille 0,5 mm).

Après un seul passage dans le broyeur, le diamètre médian ($D_{50}$) de la poudre broyée obtenue est de 8,2 µm. La viscosité BROOKFIELD de cette poudre broyée est de 18 Pa.s.

On soumet la silice P6 également au test de désagglomération tel que défini précédemment dans la description.

Après désagglomération aux ultra-sons, la poudre P6 présente un diamètre médian ($\varnothing_{50}$) de 4,3 µm et un facteur de désagglomération aux ultra-sons ($F_D$) de 6,5 ml.

EXEMPLE 13

A titre comparatif, une silice commerciale vendue sous forme de billes sensiblement sphériques par la société RHONE-POULENC CHIMIE comme charge renforçante pour élastomères, en l'occurrence la silice ZEOSIL[®] 175 MP (référencée MP1 ci-dessous) a été étudiée.

Les caractéristiques de cette silice sont rassemblées dans le tableau VIII ci-dessous. Ce tableau reprend également, pour comparaison, les caractéristiques de la silice P6 selon l'invention.

TABLEAU VIII

| | MP1 | P6 |
|---|---|---|
| s.s BET (m$^2$/g) | 175 | 170 |
| s.s CTAB (m$^2$/g) | 162 | 160 |
| prise d'huile DOP (ml/100g) | 280 | 276 |
| DRT | 0,27 | 0,28 |
| V1 (cm$^3$/g) | 0,95 | 0,90 |
| V2 (cm$^3$/g) | 0,45 | 0,55 |
| V2/V1 (%) | 47 | 61 |
| taille moyenne des billes (µm) | 265 | 260 |
| $D_{50}$ après 1 passage (µm) | 10,5 | 8,2 |
| viscosité BROOKFIELD (Pa.s) | 7 | 18 |
| $\varnothing_{50}$(µm) | 9,1 | 4,3 |
| facteur désagglomération $F_D$ (ml) | 2,1 | 6,5 |

EXEMPLE 14

Dans cet exemple, on a comparé l'évolution des viscosités BROOKFIELD des poudres obtenues après plusieurs broyages successifs (selon le test tel que défini précédemment dans la description), et ceci pour la silice P6 (invention) et les silices MP1 et PC1 (comparatif).
Les résultats sont rassemblés dans le tableau IX ci-dessous.

TABLEAU IX

| nombre de broyages | viscosité BROOKFIELD (Pa.s) | | |
|---|---|---|---|
| | P6 | MP1 | PC1 |
| 1 | 18 | 7 | 14 |
| 2 | 32 | 13 | 18 |
| 3 | 35 | 17 | 20 |
| 4 | 34 | 16 | 21 |
| 5 | 40 | 17 | 22 |

EXEMPLE 15

Cet exemple illustre l'utilisation et le comportement de billes selon l'invention et de billes de l'art antérieur dans une formulation pour caoutchouc industriel.
La formulation utilisée est identique à celle employée dans l'exemple 10. Sa méthode de préparation correspond également à celle indiquée dans l'exemple 10.
Les résultats des essais sont les suivants :

1- Propriétés rhéologiques

Les mesures sont réalisées sur les formulations à l'état cru à 150°C.
Les résultats sont reportés dans le tableau X. On a indiqué l'appareillage utilisé pour conduire les mesures.

TABLEAU X

| | P6 | MP1 |
|---|---|---|
| Couple mini [1] | 9,9 | 12,9 |
| Couple maxi [1] | 90,3 | 94,5 |

(1) Rhéomètre MONSANTO 100S

La formulation obtenue à partir de billes selon l'invention conduit aux valeurs les plus faibles.
Cela traduit une plus grande facilité de mise en oeuvre des mélanges préparés à partir de billes de silice selon l'invention.

2- Propriétés mécaniques

Les mesures sont réalisées sur les formulations vulcanisées.
La vulcanisation est obtenue en portant les formulations à 150°C pendant 15 minutes.
Les normes utilisées ont été indiquées dans l'exempe 6.
Les résultats obtenus sont consignés dans le tableau XI.

TABLEAU XI

| | P6 | MP1 |
|---|---|---|
| module 100% (MPa) | 2,1 | 2,5 |
| module 300 % (MPa) | 8,7 | 8,5 |
| indice de renforcement [1] | 4,1 | 3,4 |
| résistance rupture (MPa) | 12,4 | 10,4 |
| résistance abrasion [2] | 82 | 90 |

(1) correspond au rapport : module 300 %/module 100 %

(2) plus la valeur mesurée est faible et meilleure est la résistance à l'abrasion.

Les résultats ci-dessous mettent clairement en évidence le meilleur effet de renforcement conféré par les billes selon l'invention.

Les billes selon l'invention conduisent à un module 100 % plus faible, preuve d'une meilleure dispersion de la silice, mais également à un module 300 % plus élevé, preuve d'une plus grande densité d'intéractions silice/caoutchouc ; elles conduisent ainsi à un indice de renforcement plus important.

Concernant la résistance à l'abrasion, la perte à l'abrasion est réduite de près de 10 % par rapport aux billes de l'art antérieur.

Le plus haut pouvoir renforçant de la silice sous forme de billes sensiblement sphériques selon l'invention est également confirmé par la valeur élevée obtenue pour la résistance à la rupture.

EXEMPLE 16

Dans un réacteur en acier inoxydable muni d'un système d'agitation par hélices et d'un chauffage par double enveloppe on introduit :

- 787 litres d'eau
- 13,2 kg de $Na_2SO_4$ (électrolyte)
- 196 litres de silicate de sodium aqueux présentant un rapport pondéral $SiO_2/Na_2O$ égal à 3,52 et une densité à 20°C égale à 1,230.

La concentration en $SiO_2$ dans le pied de cuve est alors de 47 g/l. Le mélange est alors porté à 85°C tout en le maintenant sous agitation.

L'ensemble de la réaction est effectué à 85°C. On introduit dans le mélange 212 litres d'acide sulfurique dilué de densité à 20°C égale à 1,050, jusqu'à obtenir dans le milieu réactionnel une valeur de pH égale à 8 (mesurée à 85°C). On introduit ensuite conjointement dans le milieu de réaction 54 litres de silicate de sodium aqueux du type décrit ci-avant et 75 litres d'acide sulfurique, également du type décrit ci-avant, cette introduction simultanée d'acide et de silicate étant réalisée de manière telle que le pH du milieu de réaction soit constamment égal à $8 \pm 0,1$.

Après introduction de la totalité du silicate on continue à introduire de l'acide dilué pendant 8 mn de façon à amener le pH du milieu réactionnel à une valeur égale à 5,2. On arrête alors l'introduction d'acide et on maintient la bouillie réactionnelle 5 mn supplémentaires sous agitation.

La durée totale de la réaction est de 115 mn.

On obtient ainsi une bouillie de silice précipitée qui est filtrée et lavée au moyen d'un filtre-presse de telle sorte que l'on récupère finalement un gâteau de silice dont la perte au feu est de 79,5 % (donc un taux de matière sèche de 20,5 % en poids).

Ce gâteau est ensuite fluidifié par action mécanique et chimique (ajout d'une quantité d'aluminate de sodium correspondant à un rapport pondéral $Al/SiO_2$ de 4000 ppm). Après cette opération de délitage, on obtient un gâteau pompable de pH égal à 6,4 qui est alors atomisé au moyen d'un atomiseur à buses.

Les caractéristiques de la silice obtenue P7 sous forme de billes sensiblement sphériques (conforme à l'invention) sont les suivantes :

| | |
|---|---|
| - surface spécifique CTAB | = 154 m$^2$/g |
| - surface spécifique BET | = 167 m$^2$/g |
| - prise d'huile DOP | = 282 ml/100g |
| - DRT | = 0, 27 |
| - volume poreux $V_1$ représenté par les pores de d<400 Å | = 0,90 cm$^3$/g |
| - volume poreux $V_2$ représenté par les pores 175 Å<d<275 Å | = 0, 57 cm$^3$/g |
| - rapport $V_2/V_1$ | = 63 % |
| - taille moyenne des billes | = 270 μm |

On soumet la silice P7 aux tests de broyage et de rhéologie tels que définis précedemment dans la description (broyeur RETSCH ; débit 1,5 kg/h ; grille 0,5 mm).

Après un seul passage dans le broyeur le diamètre médian ($D_{50}$) de la poudre broyée obtenue est de 7,8 μm. La viscosité BROOKFIELD de cette poudre broyée est de 24 Pa.s.

On soumet la silice P7 également au test de désagglomération tel que défini précédemment dans la description.

Après désagglomération aux ultra-sons, la poudre P7 présente un diamètre médian ($\varnothing_{50}$) de 3,2 μm et un facteur de désagglomération aux ultra-sons ($F_D$) de 8,6 ml.

## Revendications

1. Procédé de préparation de silice précipitée, possédant une surface spécifique BET comprise entre environ 140 et 200 m$^2$/g, une surface spécifique CTAB comprise entre environ 140 et 200 m$^2$/g, se présentant sous au moins une des formes suivantes : granulés, poudre, billes sensiblement sphériques, et ayant une aptitude à la dispersion et des propriétés renforçantes améliorées, du type comprenant la réaction d'un silicate avec un agent acidifiant ce par quoi l'on obtient une suspension de silice précipitée, puis la séparation et le séchage de cette suspension, caractérisé en ce qu'on réalise la précipitation de la manière suivante :

   (i) on forme un pied de cuve initial comportant au moins une partie de la quantité totale du silicate engagé dans la réaction et un électrolyte, la concentration en silice dans ledit pied de cuve initial étant inférieure à 100 g/l et la concentration en électrolyte dans ledit pied de cuve initial étant inférieure à 17 g/l,

   (ii) on ajoute l'agent acidifiant audit pied de cuve jusqu'à l'obtention d'une valeur du pH du milieu réactionnel d'au moins environ 7,

   (iii) on ajoute au milieu réactionnel de l'agent acidifiant et, le cas échéant, simultanément la quantité restante du silicate,

   et en ce qu'on sèche une suspension présentant un taux de matière sèche d'au plus 24 % en poids.

2. Procédé selon la revendication 1, caractérisé en ce que ladite concentration en électrolyte dans ledit pied de cuve initial est inférieure à 14 g/l.

3. Procédé selon l'une des revendications 1 ou 2, caractérisé en ce qu'après l'addition simultanée d'agent acidifiant et de la quantité restante de silicate, on ajoute au milieu réactionnel une quantité supplémentaire d'agent acidifiant, de préférence jusqu'à l'obtention d'une valeur du pH du milieu réactionnel comprise entre 3 et 6,5.

4. Procédé selon l'une des revendications 1 ou 2, caractérisé en ce qu'on introduit la quantité totale du silicate engagé dans la réaction dans l'étape (i) et en ce que, dans l'étape (ii), on ajoute de l'agent acidifiant jusqu'à l'obtention d'une valeur du pH du milieu réactionnel comprise entre 3 et 6,5.

**5.** Procédé selon l'une des revendications 1 à 4, caractérisé en ce que ledit séchage est effectué par atomisation.

**6.** Procédé selon la revendication 5, caractérisé en ce qu'on sèche une suspension présentant un taux de matière sèche supérieur à 18 % en poids, de préférence supérieur à 20 % en poids.

**7.** Procédé selon la revendication 6, caractérisé en ce que ledit séchage est effectué au moyen d'un atomiseur à buses.

**8.** Procédé selon l'une des revendications 5 à 7, caractérisé en ce que le produit séché est ensuite broyé.

**9.** Procédé selon la revendication 5, caractérisé en ce qu'on sèche une suspension présentant un taux de matière sèche inférieur à 18 % en poids.

**10.** Procédé selon la revendication 9, caractérisé en ce que ledit séchage est effectué au moyen d'un atomiseur à turbines.

**11.** Procédé selon la revendication 8, caractérisé en ce que le produit broyé est ensuite aggloméré.

**12.** Procédé selon l'une des revendications 9 ou 10, caractérisé en ce que le produit séché est ensuite aggloméré.

**13.** Silice précipitée caractérisée en ce qu'elle se présente sous forme de granulés ayant une surface spécifique BET comprise entre environ 140 et 200 m$^2$/g, une surface spécifique CTAB comprise entre environ 140 et 200 m$^2$/g, un taux d'attrition inférieur à 20 %, et une distribution poreuse telle que le volume poreux constitué par les pores dont le diamètre est compris entre 175 Å et 275 Å représente au moins 60 % du volume poreux constitué par les pores de diamètres inférieurs ou égaux à 400 Å.

**14.** Silice selon la revendication 13, caractérisée en ce que ledit volume poreux constitué par les pores dont le diamètre est compris entre 175 Å et 275 Å représente au moins 65 % dudit volume poreux constitué par les pores de diamètres inférieurs ou égaux à 400 Å.

**15.** Silice selon l'une des revendications 13 ou 14, caractérisée en ce que lesdits granulés présentent un taux d'attrition inférieur à 15 %.

**16.** Silice selon l'une des revendications 13 à 15, caractérisée en ce que, après un broyage, lesdits granulés conduisent à une poudre de granulométrie telle que son diamètre médian (D$_{50}$) est inférieur à 7 μm.

**17.** Silice selon l'une des revendications 13 à 16, caractérisée en ce que lesdits granulés peuvent être broyés jusqu'à l'obtention d'une poudre de granulométrie telle que son diamètre médian (D$_{50}$) est environ de 4 μm.

**18.** Silice selon l'une des revendications 13 à 17, caractérisée en ce que, après un broyage, lesdits granulés conduisent à une poudre présentant une viscosité BROOKFIELD d'au moins 10 Pa.s, en particulier d'au moins 13 Pa.s.

**19.** Silice selon l'une des revendications 13 à 18, caractérisée en ce que lesdits granulés peuvent être broyés jusqu'à l'obtention d'une poudre présentant une viscosité BROOKFIELD d'au moins 30 Pa.s.

**20.** Silice selon l'une des revendications 13 à 19, caractérisée en ce que lesdits granulés présentent une prise d'huile DOP comprise entre 150 et 350 ml/100g, en particulier entre 180 et 300 ml/100g.

**21.** Silice selon l'une des revendications 13 à 20, caractérisée en ce que lesdits granulés sont des produits compactés, de forme parallélépipédique et de taille comprise entre 1 et 10 mm.

**22.** Silice précipitée caractérisée en ce qu'elle se présente sous forme de poudre ayant une surface spécifique BET comprise entre environ 140 et 200 m$^2$/g, une surface spécifique CTAB comprise entre environ 140 et 200 m$^2$/g, une prise d'huile DOP comprise entre 180 et 350 ml/100g, et une distribution poreuse telle que le volume poreux constitué par les pores dont le diamètre est compris entre 175 Å et 275 Å représente au moins 50 % du volume poreux constitué par les pores de diamètres inférieurs ou égaux à 400 Å.

**23.** Silice selon la revendication 22, caractérisée en ce que ledit volume poreux constitué par les pores dont le diamètre est compris entre 175 Å et 275 Å représente au moins 60 % dudit volume poreux constitué par les pores de diamètres inférieurs ou égaux à 400 Å.

**24.** Silice selon l'une des revendications 22 ou 23, caractérisée en ce que, après un broyage, elle conduit à une poudre de granulométrie telle que son diamètre médian ($D_{50}$) est inférieur à 7 µm.

**25.** Silice selon l'une des revendications 22 à 24, caractérisée en ce que après un broyage, elle conduit à une poudre présentant une viscosité BROOKFIELD d'au moins 20 Pa.s, en particulier d'au moins 30 Pa.s.

**26.** Silice selon l'une des revendications 22 à 25, caractérisée en ce qu'elle présente un facteur de désagglomération aux ultra-sons supérieur à 6 ml.

**27.** Silice selon l'une des revendications 22 à 26, caractérisée en ce qu'elle présente, après désagglomération aux ultra-sons, un diamètre médian ($\varnothing_{50}$) inférieur à 4,5 µm.

**28.** Silice précipitée caractérisée en ce qu'elle se présente sous forme de billes sensiblement sphériques ayant une surface spécifique BET comprise entre environ 140 et 200 m$^2$/g, une surface spécifique CTAB comprise entre environ 140 et 200 m$^2$/g, une taille moyenne d'au moins 80 µm, et une distribution poreuse telle que le volume poreux constitué par les pores dont le diamètre est compris entre 175 Å et 275 Å représente au moins 50 % du volume poreux constitué par les pores de diamètres inférieurs ou égaux à 400 Å.

**29.** Silice selon la revendication 28, caractérisée en ce que ledites billes présentent une prise d'huile DOP comprise entre 180 et 400 ml/100g, plus particulièrement entre 200 et 350 ml/100g.

**30.** Silice selon l'une des revendications 28 ou 29, caractérisée en ce que ledit volume poreux constitué par les pores dont le diamètre est compris entre 175 Å et 275 Å représente au moins 60 % dudit volume poreux constitué par les pores de diamètres inférieurs ou égaux à 400 Å.

**31.** Silice selon l'une des revendications 28 à 30, caractérisée en ce que, après un broyage, ledites billes conduisent à une poudre de granulométrie telle que son diamètre médian ($D_{50}$) est inférieur à 8,5 µm.

**32.** Silice selon l'une des revendications 28 à 31, caractérisée en ce que, après un broyage, ledites billes conduisent à une poudre présentant une viscosité BROOKFIELD d'au moins 13 Pa.s, en particulier d'au moins 15 Pa.s.

**33.** Silice selon l'une des revendications 28 à 32, caractérisée en ce que ledites billes peuvent être broyées jusqu'à l'obtention d'une poudre présentant une viscosité BROOKFIELD d'au moins 30 Pa.s.

**34.** Silice selon l'une des revendications 28 à 33, caractérisée en ce que ledites billes présentent un facteur de désagglomération aux ultra-sons supérieur à 5,5 ml, de préférence supérieur à 6,4 ml.

**35.** Silice selon l'une des revendications 28 à 34, caractérisée en ce que ledites billes présentent, après désagglomération aux ultra-sons, un diamètre médian ($\varnothing_{50}$) inférieur à 5 µm.

**36.** Silice selon l'une des revendications 28 à ,35, caractérisée en ce que ledites billes présentent une taille moyenne d'au moins 100 µm, de préférence d'au moins 150 µm.

**37.** Utilisation comme charge renforçante pour élastomères, notamment pour pneumatiques, d'une silice sous forme de granulés selon l'une des revendications 13 à 21, d'une silice sous forme de poudre selon l'une des revendications 22 à 27 ou d'une silice sous forme de billes sensiblement sphériques selon l'une des revendications 28 à 36.

**Claims**

**1.** Process for preparing precipitated silica, having a BET specific surface of between about 140 and 200 m$^2$/g, and a CTAB specific surface of between about 140 and 200 m$^2$/g, which is in at least one of the following forms: granules, powder, substantially spherical beads having a capacity for dispersion and having improved reinforcing properties, of the type comprising the reaction of a silicate with an acidifying agent, by means of which a suspension of precipitated silica is obtained, then the separation and drying of this suspension, characterized in that the precipitation is carried out in the following way:

(i) an initial stock solution is formed, containing at least some of the total amount of the silicate employed in the reaction and an electrolyte, the silica concentration in the said initial stock solution being less than 100 g/l and the electrolyte concentration in the said initial stock solution being less than 17 g/l,

(ii) the acidifying agent is added to the said stock solution until a reaction mixture pH of at least about 7 is obtained,

(iii) acidifying agent and, optionally, simultaneously the remaining amount of the silicate is added to the reaction mixture,

and in that a suspension having a solids content of at most 24% by weight is dried.

2. Process according to Claim 1, characterized in that the said electrolyte concentration in the said initial stock solution is less than 14 g/l.

3. Process according to one of Claims 1 and 2, characterized in that after the simultaneous addition of acidifying agent and the remaining amount of silicate, an extra amount of acidifying agent is added to the reaction mixture, preferably until a reaction mixture pH of between 3 and 6.5 is obtained.

4. Process according to one of Claims 1 and 2, characterized in that the total amount of silicate employed in the reaction is introduced in step (i), and in that, in step (ii), acidifying agent is added until a reaction mixture pH of between 3 and 6.5 is obtained.

5. Process according to one of Claims 1 to 4, characterized in that the said drying is carried out by spraying.

6. Process according to Claim 5, characterized in that a suspension having a solids content in excess of 18% by weight, preferably in excess of 20% by weight, is dried.

7. Process according to Claim 6, characterized in that the said drying is carried out using a nozzle spray.

8. Process according to one of Claims 5 to 7, characterized in that the dried product is then ground.

9. Process according to Claim 5, characterized in that a suspension having a solids content of less than 18% by weight is dried.

10. Process according to Claim 9, characterized in that the said drying is carried out using a turbine spray.

11. Process according to Claim 8, characterized in that the ground product is then aggregated.

12. Process according to one of Claims 9 and 10, characterized in that the dried product is then aggregated.

13. Precipitated silica, characterized in that it is in the form of granules having a BET specific surface of between about 140 and 200 $m^2$/g, a CTAB specific surface of between about 140 and 200 $m^2$/g, an attrition factor of less than 20%, and a pore distribution such that the pore volume consisting of the pores whose diameter lies between 175 Å and 275 Å represents at least 60% of the pore volume consisting of the pores with diameters less than or equal to 400 Å.

14. Silica according to Claim 13, characterized in that the said pore volume consisting of the pores whose diameter is between 175 Å and 275 Å represents at least 65% of the said pore volume consisting of the pores with diameters less than or equal to 400 Å.

15. Silica according to one of Claims 13 and 14, characterized in that the said granules have an attrition factor of less than 15%.

16. Silica according to one of Claims 13 to 15, characterized in that, after grinding, the said granules lead to a powder with a particle size distribution such that its median diameter ($D_{50}$) is less than 7 $\mu$m.

17. Silica according to one of Claims 13 to 16, characterized in that the said granules may be ground until a powder with a particle size distribution such that its median diameter ($D_{50}$) is about 4 $\mu$m is obtained.

**18.** Silica according to one of Claims 13 to 17, characterized in that, after grinding, the said granules lead to a powder having a Brookfield viscosity of at least 10 Pa.s, in particular at least 13 Pa.s.

**19.** Silica according to one of Claims 13 to 18, characterized in that the said granules may be ground until a powder having a Brookfield viscosity of at least 30 Pa.s is obtained.

**20.** Silica according to one of Claims 13 to 19, characterized in that the said granules have a DOP oil absorption value of between 150 and 350 ml/100 g, in particular between 180 and 300 ml/100 g.

**21.** Silica according to one of Claims 13 to 20, characterized in that the said granules are compacted products, of parallelepipedal shape and of size between 1 and 10 mm.

**22.** Precipitated silica, characterized in that it is in the form of a powder having a BET specific surface of between about 140 and 200 $m^2/g$, a CTAB specific surface of between about 140 and 200 $m^2/g$, a DOP oil absorption value of between 180 and 350 ml/100 g, and a pore distribution such that the pore volume consisting of the pores whose diameter lies between 175 Å and 275 Å represents at least 50% of the pore volume consisting of the pores with diameters less than or equal to 400 Å.

**23.** Silica according to Claim 22, characterized in that the said pore volume consisting of the pores whose diameter is between 175 Å and 275 Å represents at least 60% of the said pore volume consisting of the pores with diameters less than or equal to 400 Å.

**24.** Silica according to one of Claims 22 and 23, characterized in that, after grinding, it leads to a powder with a particle size distribution such that its median diameter ($D_{50}$) is less than 7 μm.

**25.** Silica according to one of Claims 22 to 24, characterized in that, after grinding, it leads to a powder having a Brookfield viscosity of at least 20 Pa.s, in particular at least 30 Pa.s.

**26.** Silica according to one of Claims 22 to 25, characterized in that it has an ultrasonic disaggregation factor in excess of 6 ml.

**27.** Silica according to one of Claims 22 to 26, characterized in that it has, after ultrasonic disaggregation, a median diameter ($\varnothing_{50}$) of less than 4.5 μm.

**28.** Precipitated silica, characterized in that it is in the form of substantially spherical beads having a BET specific surface of between about 140 and 200 $m^2/g$, a CTAB specific surface of between about 140 and 200 $m^2/g$, a mean size of at least 80 μm, and a pore distribution such that the pore volume consisting of the pores whose diameter lies between 175 Å and 275 Å represents at least 50% of the pore volume consisting of the pores with diameters less than or equal to 400 Å.

**29.** Silica according to Claim 28, characterized in that the said beads have a DOP oil absorption value between 180 and 400 ml/100 g, more particularly between 200 and 350 ml/100 g.

**30.** Silica according to one of Claims 28 and 29, characterized in that the said pore volume consisting of the pores whose diameter is between 175 Å and 275 Å represents at least 60% of the said pore volume consisting of the pores with diameters less than or equal to 400 Å.

**31.** Silica according to one of Claims 28 to 30, characterized in that, after grinding, the said beads lead to a powder with a particle size distribution such that its median diameter ($D_{50}$) is less than 8.5 μm.

**32.** Silica according to one of Claims 28 to 31, characterized in that, after grinding, the said beads lead to a powder having a Brookfield viscosity of at least 13 Pa.s, in particular at least 15 Pa.s.

**33.** Silica according to one of Claims 28 to 32, characterized in that the said beads may be ground until a powder having a Brookfield viscosity of at least 30 Pa.s is obtained.

**34.** Silica according to one of Claims 28 to 33, characterized in that the said beads have an ultrasonic disaggregation factor in excess of 5.5 ml, preferably in excess of 6.4 ml.

35. Silica according to one of Claims 28 to 34, characterized in that the said beads have, after ultrasonic disaggregation, a median diameter ($\varnothing_{50}$) of less than 5 µm.

36. Silica according to one of Claims 28 to 35, characterized in that the said beads have a mean size of at least 100 µm, preferably at least 150 µm.

37. Use as a reinforcing filler for elastomers, in particular for tyres, of a silica in the form of granules according to one of Claims 13 to 21, a silica in the form of powder according to one of Claims 22 to 27 or a silica in the form of substantially spherical beads according to one of Claims 28 to 36.

**Patentansprüche**

1. Verfahren zur Herstellung von Fällungskieselsäure mit einer spezifischen BET-Oberfläche zwischen etwa 140 und 200 m$^2$/g, einer spezifischen CTAB-Oberfläche zwischen etwa 140 und 200 m$^2$/g, die in mindestens einer der folgenden Formen Körnchen, Pulver, im wesentlichen sphärische Kügelchen vorliegt, und zur Dispersion geeignet ist und verbesserte Verstärkungseigenschaften besitzt, des Typs, daß man ein Silikat mit einem Säuerungsmittel umsetzt, wodurch man eine Suspension von Fällungskieselsäure erhält, anschließend diese Suspension abtrennt und trocknet, dadurch gekennzeichnet, daß man die Fällung wie folgt durchführt:

(i) man bildet einen ersten Bodensatz aus mindestens einem Teil der Gesamtmenge an bei der Reaktion eingesetztem Silikat und einem Elektrolyt, wobei die Konzentration an Kieselsäure in dem ersten Bodensatz geringer als 100 g/l ist und die Konzentration an Elektrolyt in dem ersten Bodensatz geringer als 17 g/l ist,
(ii) man setzt dem ersten Bodensatz ein Säuerungsmittel bis zum Erhalt eines pH-Werts des Reaktionsmediums von mindestens etwa 7 zu,
(iii) man setzt dem Reaktionsmedium Säuerungsmittel und gegebenenfalls gleichzeitig die restliche Menge an Silikat zu,

und daß man eine Suspension mit einem Gehalt an Trockensubstanz von höchstens 24 Gew.-% trocknet.

2. Verfahren nach Anspruch 1, dadurch gekennzeichnet, daß die Konzentration an Elektrolyt in dem ersten Bodensatz geringer als 14 g/l ist.

3. Verfahren nach einem der Ansprüche 1 oder 2, dadurch gekennzeichnet, daß man nach der gleichzeitigen Zugabe des Säuerungsmittels und der Restmenge an Silikat dem Reaktionsmedium eine Ergänzungsmenge an Säuerungsmittel bevorzugt bis zum Erhalt eines pH-Werts des Reaktionsmediums zwischen 3 und 6,5 zusetzt.

4. Verfahren nach einem der Ansprüche 1 oder 2, dadurch gekennzeichnet, daß man die Gesamtmenge des in der Reaktion in Stufe (i) eingesetzten Silikats einbringt, und daß man in Stufe (ii) das Säuerungsmittel bis zum Erhalt eines pH-Werts des Reaktionsmediums zwischen 3 und 6,5 zusetzt.

5. Verfahren nach einem der Ansprüche 1 bis 4, dadurch gekennzeichnet, daß man das Trocknen durch Atomisieren durchführt.

6. Verfahren nach Anspruch 5, dadurch gekennzeichnet, daß man eine Suspension mit einem Trockensubstanzgehalt von über 18 Gew.-%, bevorzugt von über 20 Gew.-%, trocknet.

7. Verfahren nach Anspruch 6, dadurch gekennzeichnet, daß man das Trocknen mit einem Atomisateur mit Düsen durchführt.

8. Verfahren nach einem der Ansprüche 5 bis 7, dadurch gekennzeichnet, daß man das getrocknete Produkt anschließend zerkleinert.

9. Verfahren nach Anspruch 5, dadurch gekennzeichnet, daß man eine Suspension mit einem Trockensubstanzgehalt von kleiner 18 Gew.-% trocknet.

10. Verfahren nach Anspruch 9, dadurch gekennzeichnet, daß man das Trocknen mit einem Atomisateur mit Turbinen durchführt.

**11.** Verfahren nach Anspruch 8, dadurch gekennzeichnet, daß man das zerkleinerte Produkt anschließend agglomeriert.

**12.** Verfahren nach einem der Ansprüche 9 oder 10, dadurch gekennzeichnet, daß man das getrocknete Produkt anschließend agglomeriert.

**13.** Fällungskieselsäure, dadurch gekennzeichnet, daß sie in Form von Körnchen mit einer spezifischen BET-Oberfläche zwischen etwa 140 und 200 m$^2$/g, einer spezifischen CTAB-Oberfläche zwischen etwa 140 und 200 m$^2$/g, einem Zerteilungsgrad von weniger als 20% und einer Porenverteilung derart, daß das aus den Poren mit einem Durchmesser zwischen 175 Å und 275 Å bestehende Porenvolumen mindestens 60 % des aus Poren mit Durchmessern von kleiner oder gleich 400 Å bestehenden Porenvolumens beträgt, vorliegt.

**14.** Kieselsäure nach Anspruch 13, dadurch gekennzeichnet, daß das aus den Poren mit einem Durchmesser zwischen 175 Å und 275 Å bestehende Porenvolumen mindestens 65 % des aus Poren mit Durchmessern von kleiner oder gleich 400 Å bestehenden Porenvolumens beträgt.

**15.** Kieselsäure nach einem der Ansprüche 13 oder 14, dadurch gekennzeichnet, daß die Körnchen einen Zerteilungsgrad von weniger als 15 % besitzen.

**16.** Kieselsäure nach einem der Ansprüche 13 bis 15, dadurch gekennzeichnet, daß nach einer Zerkleinerung die Körnchen zu einem Pulver mit einer Korngrößenverteilung derart, daß deren mittlerer Durchmesser (D$_{50}$) kleiner 7 μm ist, führen.

**17.** Kieselsäure nach einem der Ansprüche 13 bis 16, dadurch gekennzeichnet, daß die Körnchen bis zum Erhalt eines Pulvers mit einer Korngrößenverteilung derart, daß deren mittlerer Durchmesser (D$_{50}$) etwa 4 μm beträgt, zerkleinert werden können.

**18.** Kieselsäure nach einem der Ansprüche 13 bis 17, dadurch gekennzeichnet, daß nach einer Zerkleinerung die Körnchen zu einem Pulver mit einer BROOKFIELD-Viskosität von mindestens 10 Pa.s, insbesondere mindestens 13 Pa.s, führen.

**19.** Kieselsäure nach einem der Ansprüche 13 bis 18, dadurch gekennzeichnet, daß die Körnchen bis zum Erhalt eines Pulvers mit einer BROOKFIELD-Viskosität von mindestens 30 Pa.s zerkleinert werden können.

**20.** Kieselsäure nach einem der Ansprüche 13 bis 19, dadurch gekennzeichnet, daß die Körnchen eine DOP-Ölaufnahme zwischen 150 und 350ml/100g, insbesondere zwischen 180 und 300ml/100g, besitzten.

**21.** Kieselsäure nach einem der Ansprüche 13 bis 20, dadurch gekennzeichnet, daß die Körnchen kompakte Produkte in Form eines Parallelepipeds und mit einer Größe zwischen 1 und 10 mm sind.

**22.** Fällungskieselsäure, dadurch gekennzeichnet, daß sie in Form eines Pulvers mit einer spezifischen BET-Oberfläche zwischen etwa 140 und 200 m$^2$/g, einer spezifischen CTAB-Oberfläche zwischen etwa 140 und 200 m$^2$/g, einer DOP-Ölaufnahme zwischen 180 und 350ml/100g, und einer Porenverteilung derart, daß das aus den Poren mit einem Durchmesser zwischen 175 Å und 275 Å bestehende Porenvolumen mindestens 50 % des aus Poren mit Durchmessern von kleiner oder gleich 400 Å bestehenden Porenvolumens beträgt, vorliegt.

**23.** Kieselsäure nach Anspruch 22, dadurch gekennzeichnet, daß das aus den Poren mit einem Durchmesser zwischen 175 Å und 275 Å bestehende Porenvolumen mindestens 60 % des aus Poren mit Durchmessern von kleiner oder gleich 400 Å bestehenden Porenvolumens beträgt.

**24.** Kieselsäure nach einem der Ansprüche 22 oder 23, dadurch gekennzeichnet, daß sie nach einer Zerkleinerung zu einem Pulver mit einer Korngrößenverteilung derart, daß deren mittlerer Durchmesser (D$_{50}$) kleiner 7 μm ist, führt.

**25.** Kieselsäure nach einem der Ansprüche 22 bis 24, dadurch gekennzeichnet, daß sie nach einer Zerkleinerung zu einem Pulver mit einer BROOKFIELD-Viskosität von mindestens 20 Pa.s, insbesondere mindestens 30 Pa.s, führt.

**26.** Kieselsäure nach einem der Ansprüche 22 bis 25, dadurch gekennzeichnet, daß sie einen Desagglomerationsfaktor im Ultraschall von mehr als 6 ml besitzt.

**27.** Kieselsäure nach einem der Ansprüche 22 bis 26, dadurch gekennzeichnet, daß sie nach Desagglomeration im Ultraschall einen mittleren Durchmesser ($\varnothing_{50}$) von kleiner als 4,5 μm besitzt.

**28.** Fällungskieselsäure, dadurch gekennzeichnet, daß sie in Form von im wesentlichen sphärischen Kügelchen mit einer spezifischen BET-Oberfläche zwischen etwa 140 und 200 m$^2$/g, einer spezifischen CTAB-Oberfläche zwischen etwa 140 und 200 m$^2$/g, einer mittleren Größe von mindestens 80 μm und einer Porenverteilung derart, daß das aus den Poren mit einem Durchmesser zwischen 175 Å und 275 Å bestehende Porenvolumen mindestens 50 % des aus Poren mit Durchmessern von kleiner oder gleich 400 Å bestehenden Porenvolumens beträgt, vorliegt.

**29.** Kieselsäure nach Anspruch 28, dadurch gekennzeichnet, daß die Kügelchen eine DOP-Ölaufnahme zwischen 180 und 400 ml/100g, insbesondere zwischen 200 und 350 ml/100g besitzen.

**30.** Kieselsäure nach einem der Ansprüche 28 oder 29, dadurch gekennzeichnet, daß das aus den Poren mit einem Durchmesser zwischen 175 Å und 275 Å bestehende Porenvolumen mindestens 60 % des aus Poren mit Durchmessern von kleiner oder gleich 400 Å bestehenden Porenvolumens beträgt.

**31.** Kieselsäure nach einem der Ansprüche 28 bis 30, dadurch gekennzeichnet, daß nach einer Zerkleinerung die Kügelchen zu einem Pulver mit einer Korngrößenverteilung derart, daß deren mittlerer Durchmesser ($D_{50}$) kleiner als 8,5 μm ist, führen.

**32.** Kieselsäure nach einem der Ansprüche 28 bis 31, dadurch gekennzeichnet, daß nach einer Zerkleinerung die Kügelchen zu einem Pulver mit einer BROOKFIELD-Viskosität von mindestens 13 Pa.s, insbesondere mindestens 15 Pa.s, führen.

**33.** Kieselsäure nach einem der Ansprüche 28 bis 32, dadurch gekennzeichnet, daß die Kügelchen bis zum Erhalt eines Pulvers mit einer BROOKFIELD-Viskosität von mindestens 30 Pa.s zerkleinert werden können.

**34.** Kieselsäure nach einem der Ansprüche 28 bis 33, dadurch gekennzeichnet, daß die Kügelchen einen Desagglomerationsfaktor im Ultraschall von mehr als 5,5 ml, bevorzugt mehr als 6,4 ml, besitzen.

**35.** Kieselsäure nach einem der Ansprüche 28 bis 34, dadurch gekennzeichnet, daß die Kügelchen nach Desagglomeration im Ultraschall einen mittleren Durchmesser ($\varnothing_{50}$) von kleiner als 5 μm besitzen.

**36.** Kieselsäure nach einem der Ansprüche 28 bis 35, dadurch gekennzeichnet, daß die Kügelchen eine mittlere Größe von mindestens 100 μm, bevorzugt mindestens 150 μm, besitzen.

**37.** Verwendung einer Kieselsäure in Form von Körnchen nach einem der Ansprüche 13 bis 21, einer Kieselsäure in Form eines Pulvers nach einem der Ansprüche 22 bis 27 oder einer Kieselsäure in Form von im wesentlichen sphärischen Kügelchen nach einem der Ansprüche 28 bis 36 als Verstärkungsfüllstoff für Elastomere, insbesondere für Reifen.